# EUROPEAN PATENT APPLICATION

(11) **EP 4 253 215 A1**
(43) Date of publication of application: **04.10.2023**
(21) Application number: 23165221.5
(22) Date of filing: 29.03.2023
(51) Int. Cl.: B62K 25/28, B62K 25/30, B62K 19/34

(54) **BICYCLE WITH ENHANCED SUSPENSION**

(30) Priority: 01.04.2022 US 202263326404 P; 24.03.2023 US 202318189822
(71) Applicant: Specialized Bicycle Components, Inc., Morgan Hill, CA 95037 (US)
(72) Inventor: Denk, Peter Joachim Axel, Morgan Hill, 95037 (US); Hafner, Timo Martin, Morgan Hill, 95037 (US); Segerer, Matthias Heiner Roman, Morgan Hill, 95037 (US); Bowers, Jeffrey Keith, Morgan Hill, 95037 (US); Robinson, Brian Daniel, Morgan Hill, 95037 (US)
(74) Representative: Straus, Alexander

(57) **Abstract**

A bicycle assembly can have a main frame, a subframe, and a shock absorber. The subframe can move in relation to the main frame, and the shock absorber can be used to regulate that relationship. A linkage can be connected to the shock absorber, the main frame, and a chain stay of the subframe to drive the shock absorber as the subframe is moved with respect to the main frame.

## Description

### CROSS-REFERENCE TO RELATED APPLICATIONS

This application claims priority to U.S. Application No. 18/189,822, titled BICYCLE WITH ENHANCED SUSPENSION, filed March 24, 2023, which claims the benefit of U.S. Provisional Application No. 63/326,404, titled BICYCLE WITH ENHANCED SUSPENSION, filed April 1, 2022. Each of the foregoing applications is hereby incorporated by reference herein in its entirety.

### BACKGROUND

### Field

The present technology relates generally to bicycle suspension systems and frame assemblies. In particular, the present technology relates to configurations for bicycle frames having enhanced rear suspension assemblies.

### Description of the Related Art

Off-road bicycles, or mountain bikes, may be equipped with front and rear suspension assemblies operably positioned between the frame of the bicycle and the front and rear wheels, respectively. Providing front and rear suspension on a mountain bike potentially improves handling and performance by absorbing bumps, and other rough trail conditions, which may be encountered while riding off-road. However, because mountain bikes are typically pedal-driven, i.e., use the rider's power output to propel the bicycle, the provision of rear suspension, especially, may undesirably absorb a rider's power output, resulting in wasted effort.

Some key performance criteria or features for mountain bikes include leverage ratio, anti-rise, anti-squat, good control and pedaling characteristics. Leverage ratio is the length of rear wheel travel divided by the length of the shock stroke. Anti-rise is the amount which the suspension resists the extension of the suspension during braking. This can be an important characteristic, particularly in downhill mountain biking when the bicycle brakes are often applied to control the bicycle's downhill speed. In general, when brakes are applied, a bicycle rear suspension will typically tend to come up out of compression, which reduces the pressure applied on the rear wheel to the ground, and thus can cause loss of control, locking up of the rear wheel, and/or the like. Anti-rise is typically represented as a percentage, with 100% anti-rise representing a situation in which, under rear braking only, the suspension will tend not to compress or extend in response to braking forces. A percentage above 100% represents a situation in which, under rear braking only, the suspension will tend to compress in response to braking forces. A percentage less than 100% represents a situation in which, under rear braking only, the suspension will tend to extend in response to braking forces.

Anti-squat is essentially the amount which the suspension resists the compression of the suspension during pedaling. Anti-squat is typically represented as a percentage, with 100% anti-squat representing a situation in which there will tend to be no suspension compression or extension in response to a rider's pedaling (e.g., the forces are in balance). A percentage below 100% represents a situation in which the suspension will tend to compress in response to a rider's pedaling, and a percentage above 100% represents a situation in which there is more than enough anti-squat forces in the suspension to resist compressing in response to a rider's pedaling, and the suspension will tend to extend.

Good control is the extent to which the suspension enhances the ability of the rider to precisely control the bicycle. Finally, good pedaling characteristics include avoiding kickback and significant variation in the pedal stroke during riding.

Pedal kickback is essentially the amount of rotation angle that the crank shaft rotates when the suspension moves. Pedal kickback is due to a number of factors, but a major factor creating pedal kickback is the increase in length from rear axle to the bottom bracket. This increase in length occurs when the suspension compresses upon impact and the rear wheel moves away from the bottom bracket. Since the rear wheel is typically touching the ground, the added chain length comes from the crank rotating backwards. Some bicycle suspension designs have no pedal kickback, but suffer from other limitations.

In addition to bicycle performance features, other aspects of a bicycle's structure are considered desirable by cyclists. For example, many cyclists prefer a traditional triangular mainframe, often coupled with an articulating sub-frame for bicycles with rear suspensions. In addition, many cyclists desire that the down tube and/or the seat tube members of the mainframe have open space for the mounting of water bottle cages and other accessories. Further, the weight of the bicycle has long been a key consideration for cyclists.

There are several primary types of bicycle rear suspensions, including single pivot, linkage-driven pivot, high-pivot idler, twin-link, and four-bar with pivot on the chain stay. The single pivot suspension uses a solid swingarm to connect the rear axle, main pivot, and shock damper. The leverage ratio in a single pivot suspension is determined by the position of the shock mount. The linkage-driven pivot suspension utilizes a solid swingarm with a linkage added between the swingarm and the shock, which allows the leverage ratio curve to be adjusted. The high-pivot idler suspension features a pivot location positioned higher over the chainring. The chain is routed from the chainring, over the top of or very near to the main pivot. The twin-link suspension utilizes a solid swingarm mounted to the frame with two rocker links, connecting the swingarm to the mainframe pivot. The shock can be driven by the rear swingarm or one of the rocker links. The four-bar suspension with pivot on the chain stay typically positions the pivot at the axle-end of the chain stay and mounts the axle to the seat stay, behind the pivot. This gives the rear wheel axle a modified axle path, rotating about an instant center that changes position through the travel.

The most popular of the type of suspension bicycle is probably the four-bar suspension with pivot at the axle-end of the chain stay and the axle mounted to the seat stay. The advantages of this design are well-known. For example, the suspension has a different instant center at different levels of compression, which can be useful due to the different requirements on the suspension at different levels of compression (e.g., during pedaling, after high impact, etc.).

### SUMMARY

The systems, methods, and devices described herein have innovative aspects, no single one of which is indispensable or solely responsible for their desirable attributes. Without limiting the scope of the claims, some of the advantageous features will now be summarized.

In one aspect, there is a recognition that the architecture of the four-bar suspension with pivot at the axle-end of the chain stay and the axle mounted to the seat stay can be limiting, particularly for bicycles used for certain types of riding. For example, many such designs drive the shock absorber with a linkage of the four-bar suspension that couples the seat tube to the seat stay, and such designs can cause the leverage ratio curve to be undesirable and/or to be undesirably sensitive to the position of the linkage.

In one aspect, there is a recognition that it would be desirable to have a four-bar pivot suspension with enhanced anti-rise, good control, and good pedaling characteristics. To achieve this, it has been determined that it would be desirable to split the driving of the shock from the kinematics of the movement of the rear wheel, among other things.

The present disclosure describes bicycles having rear suspension systems that address one or more of the deficiencies described above and that provide one or more of a variety of benefits over previous rear suspension systems, such as better anti-rise characteristics, more desirable leverage ratio curves and/or characteristics, and/or better control and pedaling characteristics. For example, some embodiments disclosed herein include an improved four-bar suspension system that separates or decouples the kinematics of the wheel movement in the four-bar linkage arrangement from the driving of the shock absorber. Such separation or decoupling can have a number of benefits, including enabling the usage of a separate linkage system to drive the shock absorber that is not sensitive to, or is at least less sensitive to, the position of the rear wheel and/or one or more linkages of the four-bar suspension assembly. For example, in a typical four-bar linkage suspension assembly, the shock absorber may be driven by a linkage or lever of the four-bar system that is pivotally coupled to the seat tube at its front end and to the seat stay at its rear end. Such a design can have undesirable leverage curve characteristics and/or can cause the leverage ratio to be sensitive to the position of that linkage or lever, which can have undesirable effects on the bicycle's performance characteristics, at least for some types of riding.

In some embodiments disclosed herein, a bicycle rear suspension assembly comprises a four-bar linkage suspension assembly that supports a rear wheel of the bicycle, and a shock support assembly that comprises two or more additional linkages that drive the shock absorber (e.g., that cause the shock absorber to compress when the four-bar linkage is compressed). Although various embodiments disclosed herein combine the shock support assembly linkages with a four-bar linkage rear suspension, the concepts disclosed herein are not limited to being used with four-bar linkage suspensions, and may be used with other types of suspension.

In some embodiments, the bicycle rear suspension comprises a chain stay that defines two separate pivot axes at its forward end. For example, the forward end of the chain stay may comprise an upper pivot that enables the chain stay to pivot with respect to a mainframe of the bicycle, and a lower pivot that couples to one of the shock support assembly linkages to cause the shock absorber to compress or extend when the suspension assembly compresses or extends, respectively. The shock support assembly may comprise, for example, an upper shock link that is pivotally coupled to the bicycle mainframe in a middle region of the upper shock link, pivotally coupled to the shock absorber at an upper end of the upper shock link, and pivotally coupled to a lower shock link at a lower end of the upper shock link. The lower shock link may, for example, be pivotally coupled to the lower pivot of the forward end of the chain stay at a rearward end of the lower shock link, and pivotally coupled to the lower end of the upper shock link at a forward end of the lower shock link. Such a design can have a number of benefits, including separating the wheel movement kinematics from the shock absorber driving kinematics, providing for better anti-rise characteristics, providing less pedal kickback, lowering the center of gravity of the bicycle to provide better control, and/or the like.

In prior rear suspension systems, such as prior four-bar linkage rear suspension systems, the suspension could generally be designed to have better braking performance (e.g., better anti-rise characteristics) or better pedaling characteristics (e.g., such as less pedal kickback), but not both. The technologies disclosed herein, on the other hand, enable the design of improved suspension assemblies that can have both better braking performance and better pedaling characteristics.

According to some embodiments, a bicycle assembly comprises: a main frame comprising a seat tube, a head tube and at least one connecting tube connecting the seat tube and the head tube; a subframe configured to rotate with respect to the main frame, the subframe comprising a seat stay, a chain stay, and a first link, the chain stay mounted to the main frame, the first link pivotably connected to the main frame at a first location and pivotably connected to the seat stay, and the seat stay pivotably connected to the chain stay; a shock absorber having a first end and a second end, the first end of the shock absorber mounted on the main frame; a second link having a first end and a second end, the first end of the second link connected to the second end of the shock absorber, and the second link being pivotable with respect to the main frame; and a third link connected to the second link and the chain stay, wherein the second link and third link are configured to transmit force between the shock absorber and the chain stay.

In some embodiments, the bicycle assembly further comprises a bottom bracket support member, wherein the seat tube extends from the at least one connecting tube to the bottom bracket support member. In some embodiments, the bicycle assembly further comprises another connecting tube extending from the head tube to the seat tube. In some embodiments, the seat tube, the at least one connecting tube, and the another connecting tube form a generally triangular shape. In some embodiments, the seat stay comprises a pair of laterally spaced arms, and the chain stay comprises a pair of laterally spaced arms. In some embodiments, the second link is pivotably mounted to the main frame between the first end of the second link and the second end of the second link. In some embodiments, a forward end of the chain stay is pivotably connected to the main frame at a location that is above a pivotable connection between the forward end of the chain stay and the third link. In some embodiments, the forward end of the chain stay comprises an upper arm and a lower arm, the upper arm comprising the pivotable connection between the forward end of the chain stay and the main frame, the lower arm comprising the pivotable connection between the forward end of the chain stay and the third link. In some embodiments, the forward end of the chain stay is pivotably connected to the main frame above a crank axis, and the forward end of the chain stay is pivotably connected to the third link below the crank axis. In some embodiments, the bicycle assembly further comprises a rear wheel hub axis, wherein the chain stay is pivotable with respect the seat stay about an axis that is below the rear wheel hub axis. In some embodiments, the rear wheel hub axis is defined by the seat stay. In some embodiments, for at least 90% of a range of compression stroke between a first position where the bicycle assembly is 0% compressed and a second position where the bicycle assembly is 100% compressed, a leverage ratio of the bicycle assembly as a function of level of compression has a negative slope which has a greater negative magnitude the more the bicycle assembly is compressed. In some embodiments, the bicycle assembly further comprises a rear brake assembly, wherein the bicycle assembly has anti-rise of less than or equal to 50%, and a graph of the anti-rise as a function of rear wheel travel has a non-negative slope, at least within a range of 5% to 50% of the rear wheel travel. In some embodiments, the bicycle assembly has anti-rise of greater than or equal to 40%. In some embodiments, the bicycle assembly is configured such that, when the bicycle assembly is in a riding position on a horizontal surface, with the subframe in a relaxed configuration, the bicycle assembly has at least one of the following: (1) a main shock body of the shock absorber positioned lower than the first location where the first link is pivotably connected to the main frame; (2) a first eye of the shock absorber and a second eye of the shock absorber, both being positioned lower than the first location where the first link is pivotably connected to the main frame; (3) the main shock body positioned not higher than 220mm above a crank axis defined by a bottom bracket of the main frame; (4) both the front shock eye and rear shock eye being not higher than 220mm above the crank axis defined by the bottom bracket; or (5) all suspension members remain below 1/2 a stack height of the bicycle assembly. In some embodiments, the bicycle assembly further comprises a rear brake assembly, wherein the bicycle assembly has anti-rise between 25% and 45% at zero compression of the bicycle assembly, and between 35% and 55% at full compression of the bicycle assembly. In some embodiments, the bicycle assembly further comprises a fork, a saddle and two wheels.

According to some embodiments, a bicycle assembly comprises: a main frame comprising a seat tube, a head tube and a connecting tube connecting the seat tube and the head tube; a subframe configured to rotate with respect to the main frame, the subframe comprising a seat stay, a chain stay, and a first link connected to the main frame and the seat stay; a shock absorber having a first end and a second end, the first end of the shock absorber mounted on the main frame; and a linkage, the linkage comprising at least a second link connected to the second end of the shock absorber and pivotable with respect to the main frame which cooperates in the transmission of force from the shock absorber to the chain stay, wherein the chain stay is pivotably coupled to the linkage at a pivot axis that moves along a path that is not dependent on force exerted on or generated by the shock absorber.

In some embodiments, the second link is pivotably mounted to the main frame between a first end of the second link and a second end of the second link. In some embodiments, the linkage comprises a third link, and a forward end of the chain stay is pivotably connected to the main frame at a location that is above a pivotable connection between the forward end of the chain stay and the third link. In some embodiments, the forward end of the chain stay comprises an upper arm and a lower arm, the upper arm comprising the pivotable connection between the forward end of the chain stay and the main frame, the lower arm comprising the pivotable connection between the forward end of the chain stay and the third link. In some embodiments, the forward end of the chain stay is pivotably connected to the main frame above a crank axis, and the forward end of the chain stay is pivotably connected to the third link below the crank axis. In some embodiments, the bicycle assembly further comprises a rear wheel hub axis, wherein the chain stay is pivotable with respect the seat stay about an axis that is below the rear wheel hub axis. In some embodiments, the rear wheel hub axis is defined by the seat stay. In some embodiments, for at least 90% of a range of compression stroke between a first position where the bicycle assembly is 0% compressed and a second position where the bicycle assembly is 100% compressed, a leverage ratio of the bicycle assembly as a function of level of compression has a negative slope which has a greater negative magnitude the more the bicycle assembly is compressed. In some embodiments, the bicycle assembly further comprising a rear brake assembly, wherein the bicycle assembly has anti-rise of less than or equal to 50%, and a graph of the anti-rise as a function of rear wheel travel has a non-negative slope, at least within a range of 5% to 50% of the rear wheel travel.

According to some embodiments, a bicycle assembly comprises: a main frame comprising a seat tube, a head tube and a connecting tube connecting the seat tube and the head tube; a subframe configured to rotate with respect to the main frame, the subframe comprising a pair of separate or integrally formed seat stays, a pair of separate or integrally formed chain stays, and a first link, the chain stays mounted to the main frame and the first link connected to the main frame and the seat stays; a shock absorber having a first end and a second end, the first end of the shock absorber mounted on the main frame; and a linkage, the linkage comprising at least a second link connected to the second end of the shock absorber and pivotable with respect to the main frame which cooperates in the transmission of force from the shock absorber to the chain stays.

In some embodiments, for at least 90% of a range of compression stroke between a first position where the bicycle assembly is 0% compressed and a second position where the bicycle assembly is 100% compressed, a leverage ratio of the bicycle assembly as a function of level of compression has a negative slope which has a greater negative magnitude the more the bicycle assembly is compressed. In some embodiments, the subframe defines a rear wheel hub axis, and a position of an instant center of the rear wheel hub axis changes during compression of the bicycle assembly. In some embodiments, the subframe defines a rear wheel hub axis, wherein the subframe comprises an upper mechanism comprising at least a portion of the seat stays and the first link, wherein the subframe comprises a lower mechanism comprising at least a portion of the seat stays and the chain stays, wherein the subframe does not have more than two pivots between the hub axis and the main frame in the upper mechanism, and wherein the subframe does not have more than two pivots between the hub axis and the main frame in the lower mechanism. In some embodiments, the at least a second link of the linkage comprises at least two pivotably coupled links that transmit force from the shock absorber to the chain stays. In some embodiments, the linkage does not comprise a link coupled to the first link of the subframe or a link coupled to the seat stays of the subframe. In some embodiments, the at least two pivotably coupled links comprises a third link pivotably coupled to the second link at a pivot axis that is positioned below a pivot axis at which the chain stays are pivotably coupled to the main frame. In some embodiments, the subframe is configured such that a change in configuration of one or more of the seat stays or the first link that causes at least 10% variation in anti-rise at some point in a compression stroke causes no more than 4% variation in anti-squat throughout the compression stroke between 30% and 90% of the compression stroke, and causes no more than 0.05 variation in leverage ratio throughout the compression stroke between 30% and 90% of the compression stroke. In some embodiments, the bicycle assembly further comprises a brake arm mount which is fixed with respect to the seat stays. In some embodiments, the subframe defines a rear wheel hub axis, and the bicycle assembly further comprises a brake mount that is positioned such that the brake mount cannot translate with respect to the rear wheel hub axis in a direction that is perpendicular to the rear wheel hub axis. In some embodiments, the subframe defines a rear wheel hub axis, and the bicycle assembly further comprises a rear brake mount that is not attached to any member of the bicycle assembly that does not, at least in part, define a movement path of the rear wheel hub axis with respect to the main frame.

According to some embodiments, a bicycle assembly comprises: a main frame comprising a seat tube, a head tube and at least one connecting tube connecting the seat tube and the head tube; a subframe configured to rotate with respect to the main frame, the subframe comprising a seat stay, a chain stay, and a first link, the chain stay mounted to the main frame, the first link pivotably connected to the main frame at a first location and pivotably connected to the seat stay, and the seat stay pivotably connected to the chain stay; a shock absorber having a first end and a second end, the first end of the shock absorber mounted on the main frame; a second link having a first end and a second end, the first end of the second link connected to the second end of the shock absorber, and the second link being pivotable with respect to the main frame; and a third link connected to the second link and the chain stay, wherein the second link and third link are configured to transmit force between the shock absorber and the chain stay.

In some embodiments, the bicycle assembly further comprises: a bottom bracket support member, wherein the seat tube extends from the at least one connecting tube to the bottom bracket support member; another connecting tube extending from the head tube to the seat tube; and wherein the seat tube, the at least one connecting tube, and the another connecting tube form a generally triangular shape. In some embodiments, the seat stay comprises a pair of laterally spaced arms, and the chain stay comprises a pair of laterally spaced arms. In some embodiments, the second link is pivotably mounted to the main frame between the first end of the second link and the second end of the second link. In some embodiments, wherein a forward end of the chain stay is pivotably connected to the main frame at a location that is above a pivotable connection between the forward end of the chain stay and the third link. In some embodiments, the forward end of the chain stay comprises an upper arm and a lower arm, the upper arm comprising the pivotable connection between the forward end of the chain stay and the main frame, the lower arm comprising the pivotable connection between the forward end of the chain stay and the third link. In some embodiments, the forward end of the chain stay is pivotably connected to the main frame above a crank axis, and the forward end of the chain stay is pivotably connected to the third link below the crank axis. In some embodiments, the bicycle assembly further comprises a rear wheel hub axis, wherein the chain stay is pivotable with respect the seat stay about an axis that is below the rear wheel hub axis, and wherein the rear wheel hub axis is defined by the seat stay. In some embodiments, for at least 90% of a range of compression stroke between a first position where the bicycle assembly is 0% compressed and a second position where the bicycle assembly is 100% compressed, a leverage ratio of the bicycle assembly as a function of level of compression has a negative slope which has a greater negative magnitude the more the bicycle assembly is compressed. In some embodiments, the bicycle assembly further comprises a rear brake assembly, wherein the bicycle assembly has anti-rise of less than or equal to 50%, and a graph of the anti-rise as a function of rear wheel travel has a non-negative slope, at least within a range of 5% to 50% of the rear wheel travel. In some embodiments, the bicycle assembly has anti-rise of greater than or equal to 40%. In some embodiments, the bicycle assembly is configured such that, when the bicycle assembly is in a riding position on a horizontal surface, with the subframe in a relaxed configuration, the bicycle assembly has at least one of the following: (1) a main shock body of the shock absorber positioned lower than the first location where the first link is pivotably connected to the main frame; (2) a first eye of the shock absorber and a second eye of the shock absorber, both being positioned lower than the first location where the first link is pivotably connected to the main frame; (3) the main shock body positioned not higher than 220mm above a crank axis defined by a bottom bracket of the main frame; (4) both the front shock eye and rear shock eye being not higher than 220mm above the crank axis defined by the bottom bracket; or (5) all suspension members remain below 1/2 a stack height of the bicycle assembly. In some embodiments, the bicycle assembly further comprises a rear brake assembly, wherein the bicycle assembly has anti-rise between 25% and 45% at zero compression of the bicycle assembly, and between 35% and 55% at full compression of the bicycle assembly. In some embodiments, the bicycle assembly further comprises a fork, a saddle and two wheels. In some embodiments, the chain stay is pivotably coupled to the third link at a pivot axis that moves along a path that is not dependent on force exerted on or generated by the shock absorber.

### BRIEF DESCRIPTION OF THE DRAWINGS

The above-mentioned aspects, as well as other features, aspects, and advantages of the present technology will now be described in connection with various embodiments, with reference to the accompanying drawings. The illustrated embodiments, however, are merely examples and are not intended to be limiting.
FIG. 1 is a side elevational view of an off-road bicycle, or mountain bike, incorporating a bicycle frame having certain features, aspects and advantages of the present technology.
FIG. 2A is a side elevational view of the bicycle frame of FIG. 1, with certain components of the bicycle removed for the purpose of clarity.
FIG. 2B is a bottom view of the bicycle frame of FIG. 2A.
FIG. 2C is a cross-sectional view of the bicycle frame of FIG. 2A.
FIG. 2D is a rear view of the bicycle frame of FIG. 2A.
FIG. 2E is a rear, bottom, and side perspective view of the bicycle frame of FIG. 2A.
FIG. 3 is an enlarged side elevational view of the bicycle frame of FIG. 2A, with certain mainframe portions and the chain stay being shown partially transparent.
FIG. 4 is a side schematic view of another embodiment of a bicycle frame.
FIGS. 5A-5C illustrate example embodiments of performance characteristic graphs.
FIGS. 6A-6C are side schematic views of additional embodiments of bicycle frames.
FIG. 7 is a side schematic view of another embodiment of a bicycle frame.
FIG. 8 is a side schematic view of another embodiment of a bicycle frame.
FIG. 9A is a side schematic view of another embodiment of a bicycle frame.
FIG. 9B is a side schematic view of the bicycle frame of FIG. 9A in a compressed configuration.
FIG. 9C is a cross-sectional view of a portion of the bicycle frame of FIG. 9A.
FIG. 9D is a perspective view of a portion of the bicycle frame of FIG. 9A.

### DETAILED DESCRIPTION

In the following detailed description, reference is made to the accompanying drawings, which form a part of the present disclosure. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the figures, can be arranged, substituted, combined, and designed in a wide variety of different configurations, all of which are explicitly contemplated and form part of this disclosure. For example, a system or device may be implemented or a method may be practiced using any number of the aspects set forth herein. In addition, such a system or device may be implemented or such a method may be practiced using other structure, functionality, or structure and functionality in addition to or other than one or more of the aspects set forth herein. Alterations and further modifications of the inventive features illustrated herein, and additional applications of the principles of the inventions as illustrated herein, which would occur to one skilled in the relevant art and having possession of this disclosure, are to be considered within the scope of the invention. Descriptions of unnecessary parts or elements may be omitted for clarity and conciseness, and like reference numerals refer to like elements throughout.

The disclosure herein presents embodiments of improved bicycle rear suspension systems having various benefits over prior designs. For example, the embodiments described below may include one or more of the following benefits, among others: better anti-rise characteristics (e.g., resistance to loss of wheel traction when braking), less pedal kickback, a more desirable leverage ratio curve, improved control, and/or the like.

In some embodiments, the bicycle rear suspension comprises a four-bar linkage design that separates or decouples the driving of the shock absorber from the kinematics of the wheel motion. For example, the shock absorber may be driven in some embodiments by a shock support assembly that comprises a plurality of shock links, with a first of the shock links pivotally coupled to an end of the shock absorber, and a second of the shock links pivotally coupled to a portion of the four-bar linkage arrangement, such as a forward lower portion of the chain stay. In some embodiments, the pivotal connection between the chain stay and the second linkage of the shock support assembly is separate from any pivot axes of the four-bar linkage arrangement. With such an arrangement, the pivotal connection between the chain stay and the second linkage of the shock support assembly can be positioned wherever it can provide the best performance characteristics, without affecting the kinematics of the four-bar linkage movement. For example, in some embodiments, the second linkage of the shock support assembly is positioned below and generally parallel to a lower surface of the bicycle mainframe, and the first linkage of the shock support assembly extends upward through the bicycle mainframe from the second linkage to the shock absorber. Further details of such a design are described below with reference to the figures.

### Example Bicycle with Rear Suspension

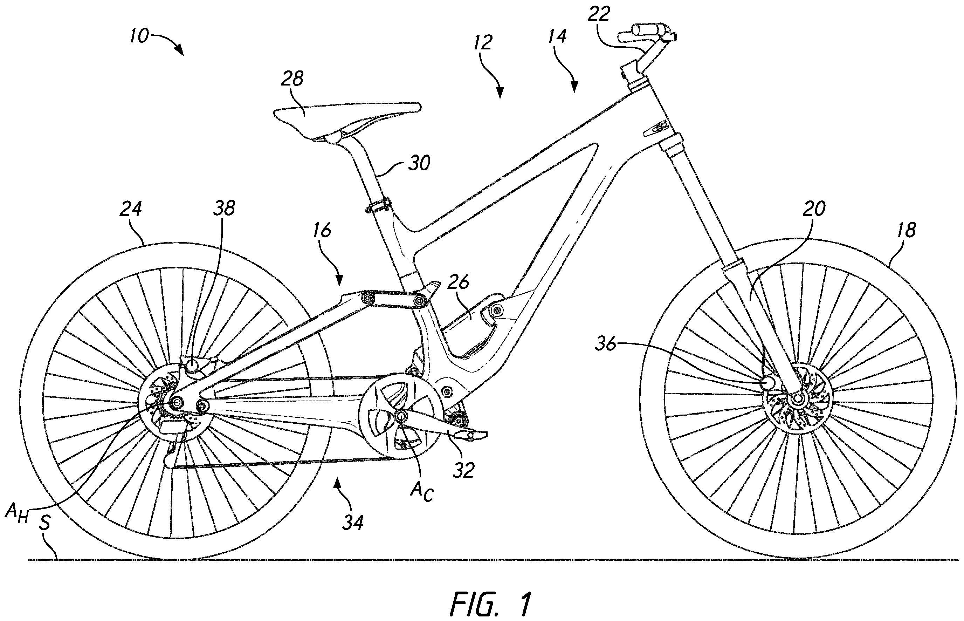

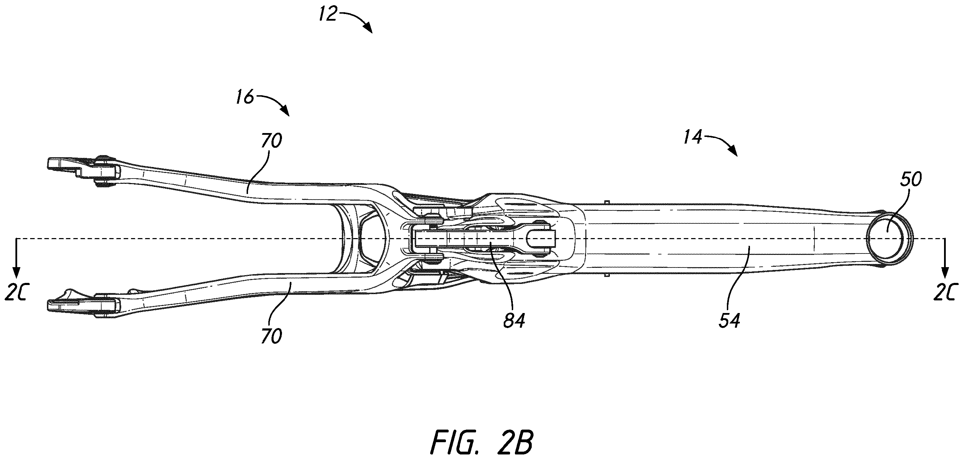

FIG. 1 illustrates one embodiment of an off-road bicycle, or mountain bike 10, including a preferred rear suspension assembly. The bicycle 10 is described herein with reference to a coordinate system wherein a longitudinal axis extends from a forward end to a rearward end of the bicycle 10. A vertical, central plane generally bisects the bicycle 10 and contains the longitudinal axis (see, e.g., the cross-sectional plane shown in FIG. 2B). A lateral axis extends normal to the longitudinal axis and lies within a horizontal plane. In addition, relative heights are generally expressed as elevations from a horizontal surface S upon which the bicycle 10 is supported in an upright position. Similarly, relative forward and rearward positions are expressed as distances from a vertical axis, which is normal to the horizontal surface S. The above-described coordinate system is provided for the convenience of describing the embodiment illustrated in the figures, and is not intended to limit the scope of the present disclosure unless expressly indicated.

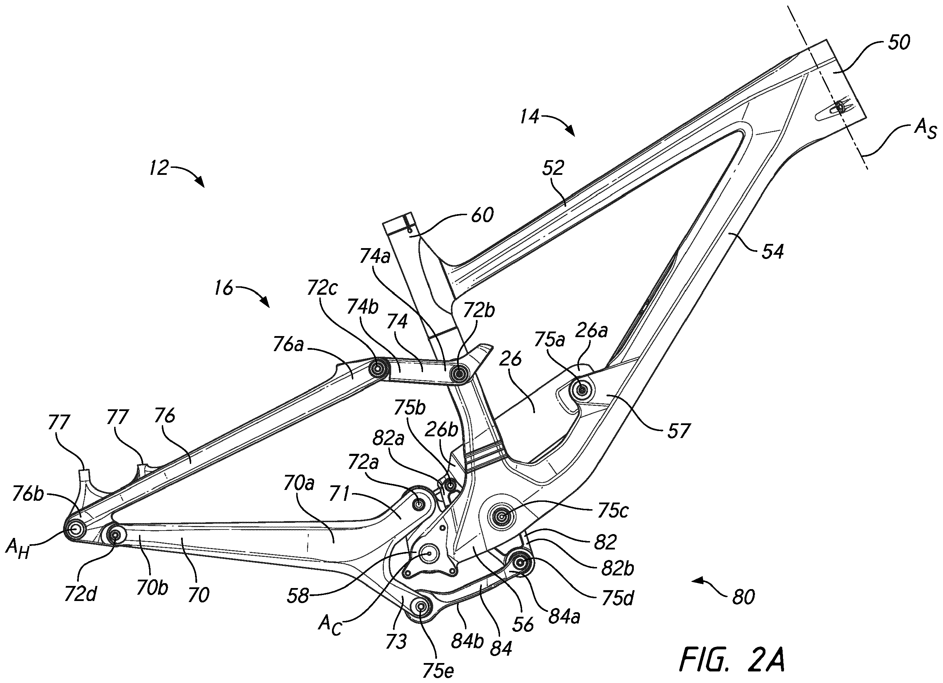

The bicycle 10 includes a frame or frame assembly 12 comprising a main frame 14 and an articulating frame, or subframe 16, pivotally supported relative to the main frame 14. The bicycle 10 also includes a front wheel 18 carried by a front suspension assembly, or suspension fork 20. A steerer tube (not shown) is journaled for rotation about a steering axis A_{S} defined by the main frame 14 (shown in FIG. 2A). A handlebar assembly 22 is connected to an upper end of the suspension fork 20 and is operable to permit a rider of the bicycle 10 to rotate the front wheel 18 about the steering axis As.

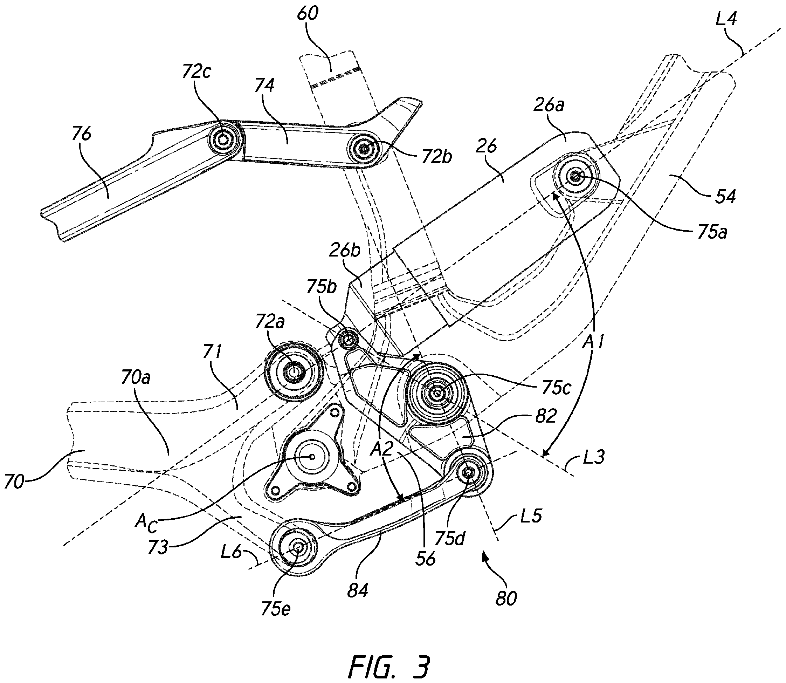

A rear wheel 24 of the bicycle 10 is carried by the subframe 16. A shock absorber 26 is pivotally connected to both the main frame 14 and the subframe 16 to provide resistance to articulating motion of the subframe 16 relative to the main frame 14 and, thus, provide resistance to the suspension travel of the rear wheel 24. The shock absorber 26 preferably biases the subframe 16 to the relaxed configuration, as shown in FIGS. 2A-2E and 3. In some embodiments, the shock absorber 26 may comprise a main shock body (e.g., the component labeled 26 in FIG. 2A), and a remote reservoir (not shown in FIG. 2A) fluidly coupled to the main shock body 26. Returning to FIG. 1, a seat assembly 28 is supported above the bicycle frame 12 at a position behind the handlebar assembly 22 and provides support for a rider of the bicycle 10.

A pedal crank assembly 32 is rotatably supported by the bicycle frame 12 and drives a multi-speed chain drive arrangement 34. The bicycle 10 also includes front and rear brake systems or assemblies 36, 38 for slowing and stopping the bicycle 10. Although the illustrated brakes 36, 38 are disc-type brakes (e.g., comprising a brake caliper that interfaces with a rotating brake rotor to slow the bicycle), other suitable brake systems may also be used, such as rim-type brakes, for example. Rider controls (not shown) are typically provided on the handlebar assembly 22 and are operable to control shifting of the multi-speed chain drive arrangement 34 and front and rear brake systems 36, 38.

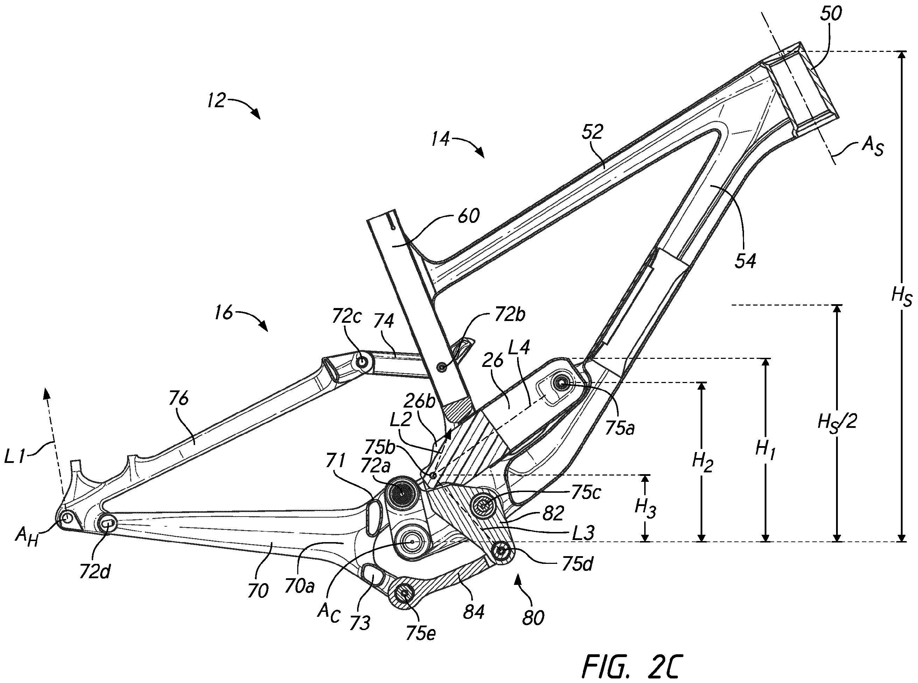

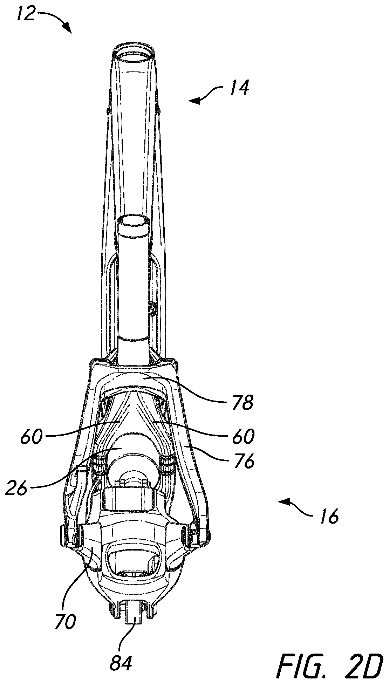

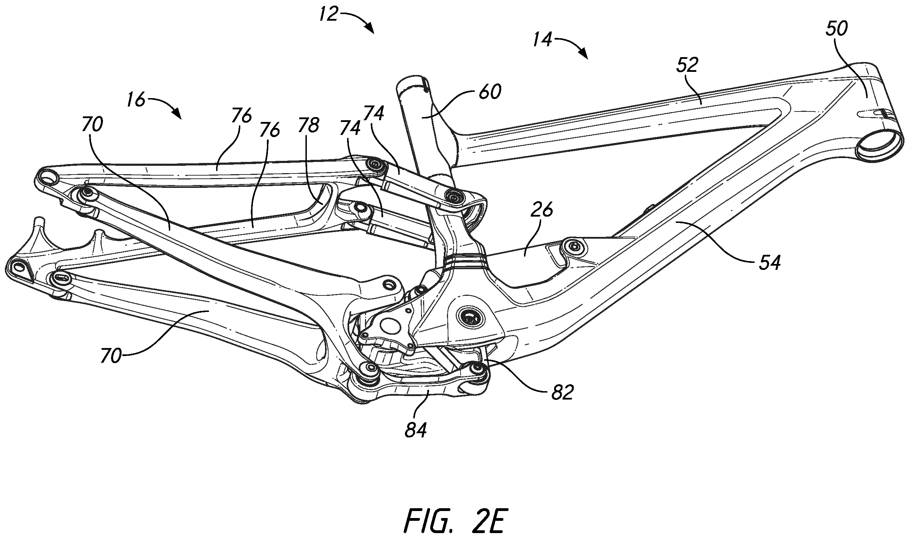

FIG. 2A illustrates a side view of the bicycle frame 12 and rear shock absorber 26 with the remaining components of the bicycle 10 removed for clarity. FIG. 2C illustrates a cross-sectional view of the bicycle frame 12 of FIG. 2A, with the cross-section taken through the plane shown in the bottom view of FIG. 2B. FIG. 2D illustrates a rear view of the bicycle frame 12 of FIG. 2A, and FIG. 2E illustrates a rear, bottom, and side perspective view of the bicycle frame of FIG. 2A. FIG. 3 illustrates an enlarged side view of the bicycle frame 12, with portions of the main frame and chain stay shown partially transparent, in order to illustrate certain details of a shock support assembly 80.

With reference to FIG. 2A, the bicycle frame 12 preferably comprises a main frame 14 and an articulating frame, or subframe 16. The main frame 14 includes a head tube 50 which defines the steering axis A_{S} of the bicycle frame 12. Desirably, the steering axis A_{S} is canted rearwardly from a vertical axis. The head tube 50 is configured to rotatably support the front suspension 20 and, thus, the front wheel 18 of the bicycle 10 (see FIG. 1).

A top tube 52 and a down tube 54 extend in a rearward direction from the head tube 50 and diverge from one another when moving toward their rearward ends. A seat tube 60 extends from the rearward end of the top tube 52 to the rearward end of the down tube 54 and, preferably, is canted rearwardly from a vertical axis. The seat tube 60 supports the seat assembly 28 through seat tube 30 (see FIG. 1). In this embodiment, a lower end of the seat tube 60 is divided laterally into two portions, to straddle the shock absorber 26 (see FIG. 2D). Other embodiments may structure the seat tube differently, however. For example, the seat tube may extend all the way to the down tube without being divided, the seat tube may stop above the down tube, the shock absorber may include an extension that straddles the seat tube, and/or the like. The seat tube 60, together with the top tube 52 and down tube 54, defines a shape that may be generally triangular or may take other forms. The suspension concepts disclosed herein are not limited to such a frame shape, however, and may be used with various frame shapes, including frames that do not include one or more of the tubes of the main frame 14 (such as the top tube 52, for example), frames that have a partial seat tube that does not extend all the way to the down tube 54, frames that include one or more gussets connecting tubes together, and/or the like. In some embodiments, the main frame 14 comprises at least one connecting tube that connects the head tube 50 to the seat tube 60. The embodiment of FIG. 2A includes two connecting tubes, namely the top tube 52 and down tube 54. Other embodiments may include more or fewer connecting tubes. Further, although the term "tube" is used for various structural members of the frame assembly 12, this does not necessarily mean that such structural members need to be tubular in shape. Using a tubular shaped structure can have structural and weight benefits, but the concepts disclosed herein are not limited to be used with such shapes.

A bottom bracket support member 56 extends from the rearward end of the down tube 54 and the bottom end of the seat tube 60. The bottom bracket support member 56 includes a bottom bracket or bottom bracket shell 58, which supports the pedal crank assembly 32 (shown in FIG. 1) for rotation about a crank axis Ac.

Preferably, the main frame 14 is constructed of individual components, as described above, which are fabricated from a metal material, such as aluminum or steel, and welded together. Desirably, the bottom bracket support member 56 is created from a metal material by a forging process and, thus, benefits from the strength and durability advantages that inherently result from the forging process. Preferably, the articulating frame 16 is directly supported by the bottom bracket support member 56, as is described in greater detail below. Further, the shock absorber 26 is preferably supported by a bracket 57 attached to the down tube 54. In some embodiments, the bracket 57 may be connected to and/or be formed as a part of the bottom bracket support member 56. In some embodiments, at least a portion of the bracket 57 may be connected to the bottom bracket support member 56, the seat tube 60, and/or the top tube 52 by a gusset.

In some embodiments, the main frame 14 may be constructed in a more conventional fashion wherein the forged bottom bracket support member 56 and bracket 57 are omitted and the articulating frame 16 and shock absorber 26 may be pivotally connected to the welded-up tubes comprising the main frame 14. Further, other suitable constructions of the main frame 14, including non-triangular constructions, may also be used, such as a monocoque construction, for example. In addition, alternative materials such as composites may also be used in whole or in part to construct the main frame 14 and/or subframe 16, as will readily be appreciated by one of skill in the art. The illustrated embodiment is preferred, however, for at least the reasons discussed herein.

As described above, the illustrated bicycle 10 includes a shock absorber 26 operably positioned between the main frame 14 and the subframe 16. Desirably, the shock absorber 26 is configured to provide both a spring force and a damping force in response to relative movement between the subframe 16 and the main frame 14, as is known in the art. The spring force is related to the relative position between the subframe 16 and the main frame 14, while the damping force is related to the relative speed of movement between the subframe 16 and the main frame 14.

Although the illustrated shock absorber 26 comprises an air spring type shock absorber, other suitable suspension shock absorbers, such as those incorporating a coil type spring, for example, may also be used. Preferably, the damping system comprises a piston movable within a fluid cylinder of the shock absorber 26. Desirably, the piston forces hydraulic fluid within the fluid chamber through one or more restrictive flow paths to generate a damping force when the shock absorber 26 is both extending and compressing, as is known in the art. In addition, other types of damping arrangements, such as inertia activated and position sensitive arrangements, may also be used, as will be readily understood by one of skilled in the art.

As described above, the subframe 16 is configured to support the rear wheel 24 (as shown in FIG. 1) for a movement throughout a suspension travel path relative to the main frame 14 from a relaxed position, substantially as illustrated in FIG. 2A, to a compressed position, wherein the subframe 16 is pivoted in an upward direction relative to the main frame 14. Preferably, the subframe 16 is a multiple linkage assembly. That is, preferably, the subframe 16 includes a plurality of linkage members pivotally interconnected with one another. However, in alternative arrangements, a single link member may carry the rear wheel 24 for movement in a simple, arcuate suspension travel path relative to the main frame 14, and/or other types of rear suspension designs may be used.

In the illustrated arrangement, the subframe 16 includes a chain stay or chain stay member 70 having a forward end 70a pivotally connected to the main frame 14 for rotation about a pivot axis 72a. Preferably, the chain stay member 70 includes a pair of laterally-spaced arms that extend in a rearward direction from the forward end 70a (as shown in FIGS. 2B and 2E) and straddle the rear wheel 24 (as shown in FIG. 1). However, in an alternative arrangement, the chain stay member 70 may comprise a single arm positioned on one side of the rear wheel 24. Desirably, the chain stay member 70 is connected directly to the main frame 14. However, alternatively, the chain stay member 70 may be connected to the main frame 14 indirectly, such as through an additional link member, for example.

A link, link member, or lever arm 74, is pivotally connected at a forward end 74a to the main frame 14 for a pivotal motion about a pivot axis 72b. Desirably, the pivot axis 72b is spaced above the pivot axis 72a and, preferably, is positioned on the seat tube 60. Other embodiments may position pivot axis 72b differently, however, such as on a different portion of the main frame 14. In the illustrated embodiment, the forward end 74a of the link member 74 includes a pair of arm portions straddling the seat tube 60 (see, e.g., FIG. 2E).

A seat stay or seat stay member 76 is pivotally supported at an upper end 76a by a rearward end 74b of the link member 74 for pivotal movement about a pivot axis 72c. A lower end 76b of the seat stay member 76 is pivotally supported at a pivot axis 72d defined by a rearward end 70b of the chain stay member 70. Preferably, the seat stay member 76 includes a pair of laterally-spaced arms (as shown in FIGS. 2D and 2E) straddling the rear wheel 24 (as shown in FIG. 1) and interconnected by a bridge 78 (see FIG. 2E) at the upper end 76a of the seat stay member 76. Further, the seat stay member 76 preferably includes a brake mount 77, for attaching a braking system, such as rear braking system 38 of FIG. 1. It can be desirable for the brake mount 77 to be fixed with respect to the seat stay member 76 (e.g., such that brake mount 77 will rotate with respect to the chain stay member 70 and link member 74 along with the seat stay member 76 when the seat stay member 76 rotates with respect to those members). Further, when the brake mount 77 is fixed with respect to the seat stay member 76 (e.g., the member in this embodiment that carries the wheel and/or defines the position of the hub axis A_{H}), this can position the brake mount 77 (and any braking system attached to the brake mount 77) in a position that desirably will not move radially relative to the wheel. For example, the brake mount 77 and/or a braking system attached to the brake mount 77 may be rotatable about the hub axis A_{H} with respect to the wheel, but desirably cannot translate with respect to the wheel and/or the hub axis A_{H} in a direction that is perpendicular to the hub axis A_{H}. In some embodiments, the seat stay member 76 is a wheel carrying link. Further, in some embodiments, the hub axis A_{H} may alternatively be defined by the chain stay member, and the chain stay member is a wheel carrying linkage. In such an embodiment, it may be desirable for the brake mount and/or the braking system to be attached to the chain stay member, such as to position the braking system in a position that does not move radially relative to the wheel. Additionally, in some embodiments, the seat stay member and the chain stay member may be pivotally coupled to one another about the hub axis A_{H}, and both members are wheel carrying linkages. In such an embodiment, it may be desirable for the brake mount and/or the braking system to be attached to either of the seat stay member or the chain stay member, such as to position the braking system in a position that does not move radially relative to the wheel. In some embodiments, the braking system is attached to any linkage or other portion of the rear suspension assembly that does not move radially with respect to the wheel. In some embodiments, the seat stay member 76 may be referred to as an upper linkage, and the chain stay member 70 may be referred to as a lower linkage.

As used herein, the terms seat stay and chain stay refer to members of a rear suspension that, at least in part, define the rear wheel hub axis movement path with respect to the main frame of the bicycle. For example, with reference to FIG. 2A, the rear wheel hub axis movement path with respect to the main frame in this rear suspension is defined by lever arm 74, seat stay member 76, and chain stay member 70. Upper and lower shock links 82, 84, on the other hand, do not contribute to defining the rear wheel hub axis movement path (although they do contribute to controlling the speed of movement of the rear wheel hub axis).

One reason it can be desirable for the brake mount 77 to be in a fixed position with respect to the seat stay member 76 (or another member that results in the brake mount 77 not moving radially with respect to the wheel) is that this can facilitate adjustment and/or tuning of the anti-rise characteristics of the bicycle assembly, while allowing independent adjustment of other performance characteristics by adjusting other portions of the suspension assembly. For example, changes can be made to the design of the brake mount 77 and/or the rear braking system 38 that attaches to the brake mount 77, to cause the rear braking system 38 to be positioned differently with respect to the seat stay member 76, but to still move or rotate with the seat stay member 76. These changes can result in adjustments to or tuning of the anti-rise characteristics of the suspension system. Although it is possible to alternatively position the brake mount 77 and/or the braking system 38 elsewhere (such as fixed to the chain stay member 70, and/or as positioned in some of the alternative suspensions arrangements described below), such positioning can make it more difficult to independently adjust or tune some performance characteristics of the suspension.

Some embodiments of rear bicycle suspension systems may be configured differently and/or include more or fewer linkages than, for example, the arrangement illustrated in FIG. 2A. For example, an alternative rear suspension arrangement may, instead of driving the shock absorber with upper and lower shock links 82, 84, drive the shock absorber with a shock driving member positioned between the seat stay and chain stay. For example, such a shock driving member extend between pivot axis 72d and a back end of a shock absorber assembly (e.g., attached to pivot axis 75b to drive the shock absorber instead of driving the shock absorber with shock support assembly 80). In such a configuration, the seat stay member or linkage that carries the rear wheel and/or defines the hub axis A_{H} may desirably be the linkage or member that the braking system is attached to. Further, the shock driving member may, in some embodiments, be fixed with respect to the chain stay member. Such a shock driving member may not, however, be considered a member that defines the rear wheel hub axis movement path with respect to the main frame of the bicycle, because removal of the member would not affect the rear wheel hub axis movement path. As another example, some alternative rear suspension arrangements may position the rear braking assembly connected to a floating brake linkage. For example, the rear braking assembly (e.g., the portion of the bicycle that includes the brake caliper, such as braking system 38 of FIG. 1) may be connected to a floating brake linkage that is pivotally coupled to the suspension system at one end to be rotatable about the hub axis A_{H}, and that is pivotally coupled at another end to another portion of the bicycle frame and/or another linkage. Again, such a floating brake linkage may not be considered a member that defines the rear wheel hub axis movement path with respect to the main frame of the bicycle, because removal of the member would not affect the rear wheel hub axis movement path.

Various embodiments disclosed herein, including the embodiment shown in FIG. 2A, may be more desirable than such alternative designs (e.g., designs with a shock driving member between the seat stay and chain stay, and/or designs with a floating brake linkage), however. This can be because, while such alternative designs may still allow a bicycle designer to adjust anti-rise characteristics into desirable ranges, such alternative designs may not allow independent adjustment of other bicycle performance characteristics, such as leverage ratio and/or other characteristics disclosed herein, into desirable ranges. Further, such alternative designs may add additional weight due to the additional members and/or linkages needed. Accordingly, it can be desirable that, in some embodiments, the suspension assemblies disclosed herein do not include a shock driving member between the seat stay and chain stay, and/or a floating brake linkage. Further, it can be desirable for the brake mount 77 and/or other portions of the rear braking system, such as braking system 38 of FIG. 1, to be attached to a portion of the rear suspension assembly that is a part of the structure that defines the rear wheel hub axis movement path with respect to the main frame of the bicycle. For example, as discussed above with reference to FIG. 2A, the seat stay member 76, chain stay member 70, and linkage 74 are all part of the structure that defines the rear wheel hub axis movement path with respect to the main frame of the bicycle, and it can be desirable for the braking system to be attached to such structure of the rear suspension. In alternative suspension designs that add a shock driving member between the seat stay and chain stay and/or add a floating brake linkage, such additional members or linkages would not be considered part of the structure that defines the rear wheel hub axis movement path with respect to the main frame of the bicycle. It can be desirable to not mount the braking system to such a linkage or member that is not part of the structure that defines the rear wheel hub axis movement path with respect to the main frame of the bicycle.

### Example Shock Driving Arrangements

With continued reference to FIG. 2A, desirably, a first or front end 26a of the shock absorber 26 is pivotally connected to the main frame 14 and, more specifically, to the bracket 57 coupled to the down tube 54, for rotation about a pivot axis 75a. A second or rearward end 26b of the shock absorber is pivotally connected to a shock support assembly 80 at pivot axis 75b. The portions of the shock absorber 26 located at pivot axes 75a and/or 75b may in some embodiments comprise and/or be referred to as eyes or eyelets. For example, the forward end 26a may comprise an eye or eyelet pivotally connected to the main frame 14 at pivot axis 75a, and the rearward end 26b may comprise an eye or eyelet pivotally connected to the shock support assembly 80 at pivot axis 75b. The shock support assembly 80 preferably comprises an upper shock link 82 having a first end 82a and a second end 82b, and a lower shock link 84 having a first end 84a and a second end 84b. The upper shock link 82 is preferably pivotally coupled to the main frame 14 at pivot axis 75c. Preferably, pivot axis 75c is positioned between the first and second ends 82a, 82b of the upper shock link 82, in a middle region of the upper shock link 82, such that the first and second ends 82a, 82b will move in opposite directions when the upper shock link 82 pivots about pivot axis 75c with respect to the main frame 14. For example, when the upper shock link 82 rotates clockwise (with reference to the view orientation of FIG. 2A), the first end 82a will move forward, while the second end 82b will move rearward, and, when the upper shock link 82 rotates counterclockwise, the first end 82a will move rearward, while the second end 82b will move forward.

The first end 82a of the upper shock link 82 is pivotally coupled to the second end 26b of the shock absorber at pivot axis 75b. The second end 82b of the upper shock link 82 is pivotally coupled to the first end 84a of the lower shock link 84 at pivot axis 75d. Further, the second end 84b of the lower shock link 84 is pivotally coupled to the chain stay member 70 at pivot axis 75e.

It should be noted that the illustrated shock support assembly 80 that comprises two links (upper shock link 82 and lower shock link 84) is merely one example of the concepts disclosed herein, and other embodiments may achieve similar benefits to the present embodiment with modified designs. For example, some designs may use a single link in the shock support assembly 80, some designs may use more than two links in the shock support assembly 80, such as three, four, or five links, some designs may position the links differently, and/or the like. Further, although the portion that drives the shock absorber 26 is referred to herein as a shock support assembly 80, this portion may alternatively be referred to as a shock link assembly, a plurality of shock driving links, a linkage, a linkage assembly, and/or the like.

With further reference to FIG. 2A, the forward end 70a of the chain stay 70 comprises a V-shaped or Y-shaped configuration that positions pivot axis 72a of the four-bar linkage suspension at an upper portion of the forward end 70a, and that positions pivot axis 75e of the shock support assembly 80 at a lower portion of the forward end 70a. In this embodiment, the upper and lower pivot axes 72a, 75e are at the ends of two arms extending above and below the crank axis A_{C}. In other embodiments, the structure of the forward end 70a of the chain stay 70 may be different, including positioning the pivot axes 72a, 75e differently and/or using a different shape of the forward end 70a to position the pivot axes 72a and 75e. For example, an alternative embodiment of the forward end 70a of the chain stay 70 may comprise a unitary structure instead of two arms that form a Y-shape or V-shape. In other words, a portion of the chain stay 70 may extend directly from the pivot axis 72a to the pivot axis 75e, instead of using a V-shaped or Y-shaped arrangement. The arrangement of the forward end 70a of the chain stay 70 shown in FIG. 2A may be desirable, however, such as to allow for the relative positions of pivot axes 72a and 75e in relation to the bottom bracket support member 56 and crank axis Ac without interfering with such components.

FIGS. 2C and 3 illustrate further details of the forward end 70a of the chain stay 70, and how pivots 72a and 75e are positioned. For example, with reference to FIG. 3, pivot axis 72a is positioned at a forward end of upper arm 71 of the chain stay 70, and pivot axis 75e is positioned at a forward end of lower arm 73 of the chain stay 70. Further, it can be seen in FIG. 3 that the upper and lower arms 71, 73 generally straddle the bottom bracket support member 56 and/or the crank axis Ac. In this embodiment, in the relaxed position (as shown in FIG. 3) the pivot axis 75e is positioned substantially underneath the pivot axis 72a, and both pivot axes 72a and 75e are positioned near to the crank axis Ac with respect to a horizontal direction, but slightly behind the crank axis Ac. For example, in some embodiments, the pivot axes 72a and 75e are positioned horizontally behind the crank axis Ac in the relaxed configuration by a distance that is between 0-2 inches. In some embodiments, the horizontal distance between the crank axis Ac and pivot axis 72a and/or pivot axis 75e is within a range of 0 to 1 inch, 0 to 2 inches, 0 to 3 inches, 1 to 3 inches, and/or the like. In some embodiments, one or both of pivot axes 72a, 75e are positioned in line with or in front of the crank axis Ac. The illustrated design has been found to be desirable, however, in producing desirable leverage ratio and anti-rise characteristics.

In addition to the desirability of any particular location or positioning of pivot axis 75e, it can be desirable to couple the shock support assembly 80, and specifically in this embodiment the lower shock link 84 of the shock support assembly 80, to the chain stay 70 instead of the seat stay 76 and/or the link or lever arm 74. This can be beneficial, for example, because it can help to decouple the shock performance characteristics from other suspension performance characteristics. Stated another way, it can be desirable for the shock absorber 26 and/or the shock support assembly 80 to act on the chain stay 70 instead of the seat stay 76 and/or the link or lever arm 74. This can further allow, for example, optimization of the kinematics of the four-bar link suspension arrangement for particular suspension performance characteristics without affecting, or at least minimizing or reducing any effect such optimizations would have on, the shock absorber performance characteristics, such as the leverage ratio curve. One way the kinematics are separated is that pivot axis 75e, which is the pivotal connection between the chain stay 70 and the shock support assembly 80, rotates in an arc shaped path about pivot axis 72a, which can be considered a non-moving instant center. The position of pivot axis 75e at any instant in time is thus only a function of how far the chain stay 70 has rotated with respect to the main frame, and is not dependent on the configuration or current position of the seat stay 76 or link 74. Stated another way, the position of pivot axis 75e at any instant in time can be considered to be directly dependent on the position of the chain stay 70, indirectly dependent on the position of the seat stay 76 and link 74 (only because they will also move along with the chain stay 70), and not at all dependent on the configuration of the seat stay 76 and link 74 (e.g., such as the starting positions of pivot axes 72c and 72b). Another way the kinematics are separated is that the shock support assembly 80 shares zero pivots with the seat stay 76 or link 74 of the subframe 16.

With reference to FIG. 2C, this figure is a cross-sectional view that illustrates more of the upper shock link 82 that is partially hidden from view in the side view of FIG. 2A. It can be seen in this figure that pivot axis 75c is generally positioned between pivot axes 75b and 75d, but is also positioned slightly above and forward of a line L3 that passes between pivot axes 75b and 75d. For example, pivot axis 75c may be spaced apart from line L3, as measured perpendicular to line L3, by a distance that is within a range of 0 to 2 inches. In some embodiments, pivot axis 75c may be spaced apart from line L3, as measured perpendicular to line L3, by a distance that is within a range of 0 to 1 inch, 0 to 2 inches, 0 to 3 inches, 0 to 4 inches, 0.5 to 1 inches, 0.5 to 1.5 inches, 1 to 2 inches, 1 to 3 inches, and/or the like.

The positioning of pivot axis 75c with respect to pivot axes 75b and 75d can help to, for example, generate desirable leverage ratio characteristics throughout the compression of the suspension assembly. The leverage ratio is defined as travel of the wheel (e.g., of the hub axis A_{H}) divided by movement of the shock absorber (e.g., of the pivot axis 75b at the rear end 26b of the shock absorber 26). With a suspension design as shown in FIG. 2C, the leverage ratio can vary throughout the stroke of the suspension, with the instantaneous leverage ratio as a function of suspension compression defining a leverage ratio curve. In this embodiment, FIG. 2C includes two vectors or lines L1 and L2 that represent the instantaneous direction and magnitude of movement of the hub axis A_{H} and pivot axis 75b, respectively, if the suspension assembly were to start to compress from the relaxed position of FIG. 2C. The instantaneous leverage ratio at this position would be the length of vector L1 divided by the length of vector L2.

Due to the linkage designs and/or kinematics of the four-bar suspension assembly and shock support assembly 80, the relative magnitudes of lines L1 and L2 will tend to change throughout the stroke, thus changing the leverage ratio at any particular point in compression of the suspension assembly. For example, the direction of line L2 (indicating the direction of motion of pivot axis 75b) is controlled by the relative positions of pivot axes 75b and 75c. More specifically, as the suspension assembly compresses, upper shock link 82 will rotate clockwise about pivot axis 75c (with reference to the view orientation of FIG. 2C), causing pivot axis 75b to move in an arc-shaped path centered on pivot axis 75c. This will also cause line L2 to rotate clockwise as the suspension is further compressed, thus causing the compression force applied from the upper shock link 82 to the shock absorber 26 to become more in line with a central axis of the shock absorber 26 (e.g., line L4) as the suspension is compressed. In other words, for a given rotational moment about pivot axis 75c, as the suspension is compressed, more of that moment will be provided to the shock absorber 26 as an axial compression force on the shock absorber 26.

Regarding the movement of the hub axis A_{H} during compression (e.g., line L1), if the hub axis were defined by the chain stay 70 (such as at pivot axis 72d or elsewhere), then the movement of the hub axis A_{H} would also follow an arc-shaped path (about pivot axis 72a), similar to the path that pivot axis 75b follows. With the presently described four-bar linkage suspension design, however, the hub axis A_{H} is positioned on the seat stay 76, and thus follows a more complex path that can be described as rotating about a moving instant center. The instant center is an imaginary axis of zero velocity, about which the hub axis A_{H} appears to rotate at a given instant. Desirably, the moving instant center allows the hub axis to move rearward somewhat, or at least move less forward than if it followed a pure arc-shaped path, which can help when the bicycle hits bumps, such as by reducing petal kickback. In some embodiments, the suspension is configured such that the hub axis A_{H} rotates about a moving instant center (or, stated another way, the position of the instant center changes) for (1) at least a majority of the suspension compression range, (2) at least 2/3 of the suspension compression range, (3) at least 3/4 of the suspension compression range, or (4) the entire suspension compression range.

As mentioned above, one downside of a four-bar linkage suspension that drives the shock absorber by coupling the shock absorber, directly or indirectly, to the upper link or lever arm 74 is that certain characteristics of the suspension performance, such as leverage ratio, can be quite sensitive to the position of the link or lever arm 74 as the suspension assembly moves throughout its stroke. With reference to FIG. 3, this figure illustrates additional details of how the presently illustrated design can have performance characteristics, such as a leverage ratio, that are less sensitive to the positioning of a particular component of the four-bar suspension assembly, and that are completely decoupled from the positioning of the upper link or lever arm 74. This arrangement also permits the upper link 74 and/or the four bar linkage to be lighter, since the force of the shock is not transmitted through either the lever arm 74 or the remaining portion of the four bar linkage. Desirably, the link 74 and the seat stay member 76 have a combined weight less than 375 grams, less than 350 grams, and/or less than 325 grams. Further, lighter bearings may be used at pivot axes 72b and 72c, due to the lower forces being transferred through those pivot axes. For example, bearings that weigh 5 grams less, 8 grams less, and/or 10 grams less than bearings that would be needed if the shock absorber 26 were connected to link member 74 may be used. Additionally, with an embodiment like shown in FIG. 3, the weight of the shock absorber 26 can be reduced by, for example, at least 80 grams, 100 grams, and/or 120 grams as compared to a shock absorber that requires an extension to straddle the seat tube. In some embodiments, reducing the load on the seat stay member 76 and link member 74 may enable those components to be lighter in weight, but may also lead to needing stronger and/or heavier components associated with the chain stay 70, and/or may add at least some of the reduced weight back in through addition of the shock support assembly 80 components. Such a configuration may still result in a lower overall weight than in other four bar suspension configurations. Even in configurations where it does not, however, the weight can be distributed lower in the bicycle assembly, leading to a lower center of gravity that can help with various performance characteristics.

FIG. 3 illustrates an enlarged view of the shock absorber 26, shock support assembly 80, and portions of the four-bar suspension assembly, with portions of the main frame and chain stay shown partially transparent in order to show more detail of the shock support assembly 80. FIG. 3 also illustrates two angles A1 and A2. Angle A1 represents the angle between the shock axis L4 and line L3 (which is drawn between pivot axes 75b and 75c). Angle A2 represents the angle between line L5 (which is drawn between pivot axes 75c and 75d) and line L6 (which is drawn between pivot axes 75d and 75e). With the presently shown configuration of upper shock link 82, which positions pivot axis 75c between pivot axes 75b and 75d, angles A1 and A2 both desirably increase in magnitude at the same time as the suspension assembly is compressed, and accordingly decrease in magnitude at the same time as the suspension assembly is extended. Further, each of angles A1 and A2 is desirably relatively close to 90° (or, in some embodiments, at least desirably closer to 90° than to 0°) in the relaxed position, the compressed position, and throughout the stroke. Such a configuration can lead to a relatively consistent leverage ratio that does not have significant or major changes throughout the stroke. For example, it can be desirable for both angles A1 and A2 to be no less than 50°, 60°, 70°, or 80° throughout the entire stroke of the suspension assembly.

In some embodiments, it can be desirable for angle A1 to be less than or equal to 90° in the relaxed configuration (e.g., the configuration shown in FIG. 3), and for angle A2 to be greater than or equal to 90° in the relaxed configuration. Other embodiments may use different arrangements for angles A1 and A2 in the relaxed configuration, however.

With further reference to FIG. 3, the illustrated relative positions of the various pivots of the four-bar suspension assembly and shock support assembly 80 can be beneficial in achieving various beneficial suspension performance characteristics, such as better leverage ratio characteristics, better anti-rise characteristics, and better control characteristics. For example, in the illustrated embodiment, shock support assembly pivots 75c, 75d, and 75e are all below the shock support assembly pivots associated with the shock absorber (e.g., pivots 75a and 75b). Further, pivots 75d and 75e are desirably both positioned below the crank axis Ac, pivots 75c and 75d are desirably both positioned forward of the crank axis Ac, and pivot axis 75e is desirably positioned rearward of the crank axis Ac. This design allows for, not only creating a relatively compact assembly that is positioned substantially surrounding the crank axis Ac, but that also helps to lower the center of gravity of the bicycle, thus improving control characteristics.

In some embodiments, the upper arm 71 of the chain stay 70, the lower arm 73 of the chain stay 70, the lower shock link 84, and the upper shock link 82 substantially surround the crank axis Ac. Stated another way, the upper arm 71, the lower arm 73, the lower shock link 84, the upper shock link 82, and a line drawn between pivots 75b and 72a can form a perimeter shape that surrounds the crank axis Ac. This design can further help to create a relatively compact assembly and lower the center of gravity of the bicycle. Further, various modifications can be made to, for example, the length of lower arm 73, the direction at which lower arm 73 extends, the length of lower shock link 84, the distance between pivot axes 75d and 75c, and the distance between pivot axes 75c and 75b, to tune the suspension to particular performance characteristics, such as a particular leverage ratio curve, without requiring any changes to the four-bar linkage suspension kinematics. This can be desirable, for example, because the same four-bar linkage suspension kinematics can be used with a variety of shock driving arrangements (e.g., configurations of the shock support assembly 80), to tune the leverage ratio, anti-rise characteristics, and/or the like, while maintaining the same four-bar linkage suspension kinematics. This can further be desirable, for example, because each of the four-bar linkage and the shock support assembly can be tuned independently to do what they each do well. For example, the four-bar linkage can be tuned to have better pedaling characteristics (such as better kickback characteristics), while the shock support assembly can be tuned to have better leverage ratio curve characteristics (such as characteristics that lead to better anti-rise characteristics).

### Performance Characteristics Examples

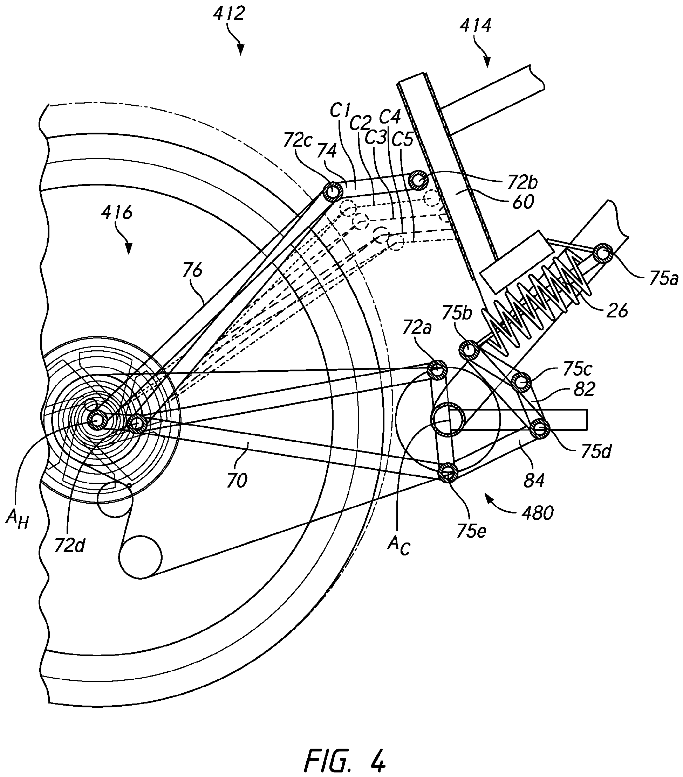

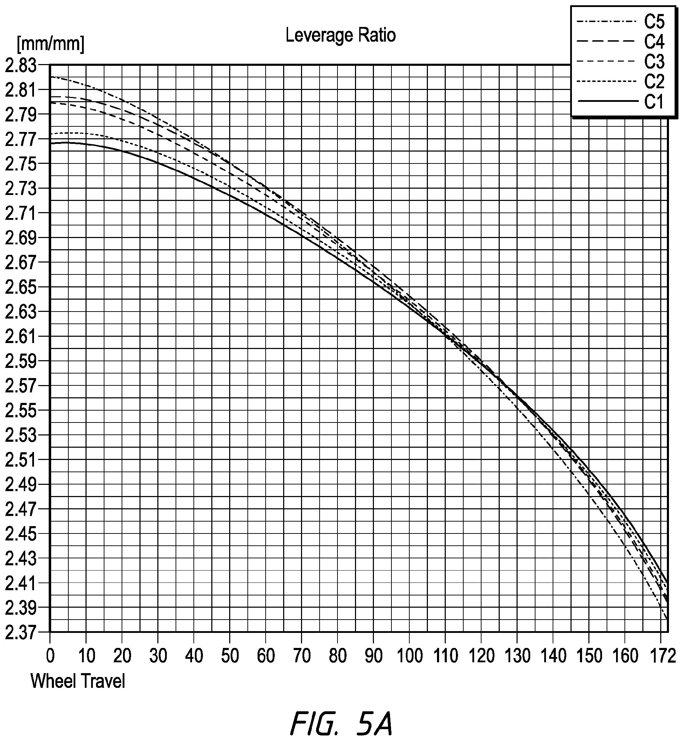

As discussed above, one of the benefits of the suspension designs and techniques disclosed herein is that the kinematics related to the driving of the shock absorber can be separated from the kinematics of the rear wheel motion, thus providing the ability to independently tune certain performance characteristics of the suspension assembly without significantly or dramatically affecting other performance characteristics of the suspension assembly. FIGS. 4 and 5A-5C illustrate one example of such independent tuning using the techniques disclosed herein.

FIG. 4 is a schematic side view diagram of a bicycle frame assembly 412 having a main frame 414 and subframe 416 that have some similarities to the main frame 14 and subframe 16 of FIG. 2A. Accordingly, the same or similar reference numbers are used to refer to the same or similar components. Further, any of the descriptions provided elsewhere in this specification related to the similar or same components as shown in FIG. 4 can apply to the design shown in FIG. 4.

One difference in the embodiment of FIG. 4 is that this schematic diagram illustrates five different suspension configurations, C1 through C5. Specifically, in each of the five suspension configurations, the same shock absorber 26, shock support assembly 480, and chain stay member 70 are utilized, but the configuration of the seat stay member 76 and link or lever arm 74 are different. In configuration one (C1), the link 74 is positioned relatively high, while in configuration five (C5), the link 74 is positioned relatively low. Configurations two, three, and four (C2, C3, C4, respectively), depict configurations where the link 74 is positioned somewhere between the upper and lower positions of configurations one and five. In each of these five configurations, corresponding changes to the seat stay member 76 are made in order to keep the hub axis A_{H} and pivot axis 72d at the same starting position (e.g., in the relaxed configuration as shown in FIG. 4) in each configuration.

FIGS. 5A-5C include graphs that illustrate certain performance characteristics of each of the five configurations, C1-C5. FIG. 5A is a graph that depicts leverage ratio as a function of wheel travel. Specifically, the x-axis depicts the displacement of the hub axis A_{H} in millimeters, from 0 mm (corresponding to the relaxed configuration), to approximately 172 mm (corresponding to a fully compressed or bottomed out configuration). Further, the y-axis depicts the leverage ratio, which is defined as the wheel travel divided by the shock travel (or, in other words, the displacement of the hub axis A_{H} in millimeters divided by the displacement of pivot axis 75b in millimeters).

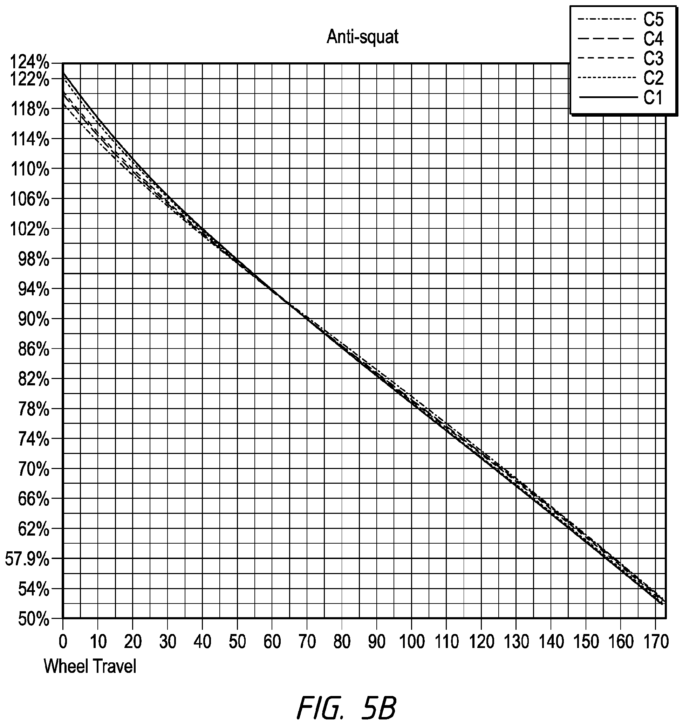

FIG. 5B is a graph that depicts anti-squat as a function of wheel travel. Specifically, the x-axis depicts the displacement of the hub axis A_{H} in millimeters, from 0 mm (corresponding to the relaxed configuration), to approximately 172 mm (corresponding to a fully compressed or bottomed out configuration). Further, the y-axis depicts the anti-squat as a percentage.

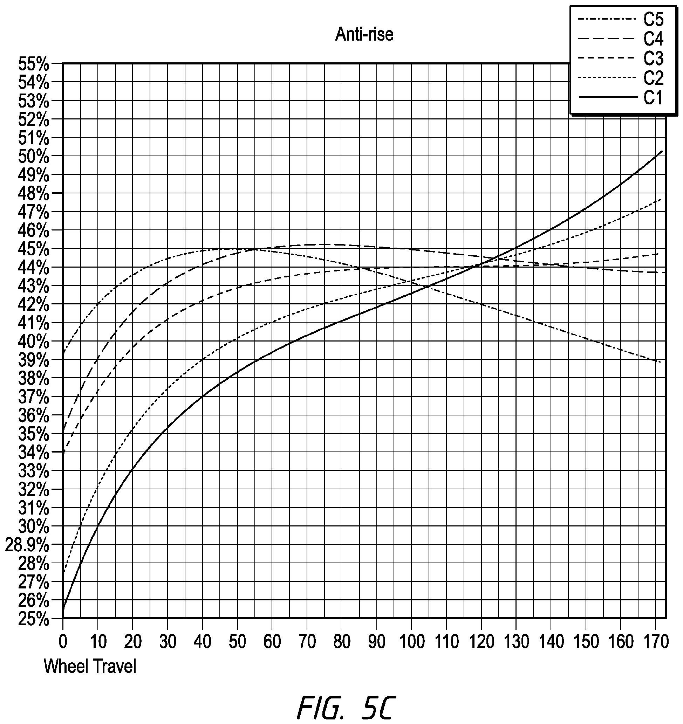

Finally, FIG. 5C is a graph that depicts anti-rise as a function of wheel travel. Specifically, the x-axis depicts the displacement of the hub axis A_{H} in millimeters, from 0 mm (corresponding to the relaxed configuration), to approximately 172 mm (corresponding to a fully compressed or bottomed out configuration). Further, the y-axis depicts the anti-rise as a percentage.

As can be seen in FIGS. 5A, 5B, and 5C, the five configuration changes of the link 74 and seat stay member 76 positioning result in significant changes to the anti-rise (see FIG. 5C), but result in relatively little, or at least less significant or dramatic, changes to the leverage ratio and anti-squat (see FIGS. 5A and 5B, respectively). For example, with reference to FIG. 4, the vertical difference in height between pivot 72b at the forward end of link 74 in the upper first configuration C1 and the lower fifth configuration C5 is approximately 70 mm, and the vertical difference in height between pivot 72c at the rearward end of link 74 in the upper first configuration C1 and the lower fifth configuration C5 is approximately 82 mm. This is a relatively significant change in height of the link 74 and its pivots, which results in relatively significant changes to anti-rise, but less significant changes to leverage ratio and anti-squat.

For example, with reference to the leverage ratio curves shown in FIG. 5A, the maximum variation between all five curves is approximately 0.055, which is at 0% compression or wheel travel. The particular leverage ratio may in some cases be more important further in the compression stroke, however, and the example illustrated in FIG. 5A shows that other degrees of compression result in even less variation between all five curves. For example, the maximum variation between all five curves between 10% and 90% of the wheel travel is approximately 0.044. As another example, the maximum variation between all five curves between 50% and 100% of compression is approximately 0.031. As another example, the maximum variation between all five curves between 50% and 90% of compression is approximately 0.024. In some embodiments, it can be desirable for the suspension assembly to be configured such that a vertical variation in the position of pivots 72b and/or 72c of at least 50, 60, 70, or 80 mm will result in no more than 0.05, 0.06, 0.07, 0.08, 0.09, or 0.10 variation in leverage ratio throughout the complete compression stroke, throughout the compression stroke from 10% to 90% of the stroke, throughout the compression stroke from 50% to 100% of the stroke, or throughout the compression stroke between 50% to 90% of the stroke.

As another example, with reference to the anti-squat curves shown in FIG. 5B, the maximum variation between all five curves is approximately 4.1%, which is at 0% compression or wheel travel. The particular anti-squat may in some cases be more important further in the compression stroke, however, and the example illustrated in FIG. 5B shows that other degrees of compression result in even less variation between all five curves. For example, the maximum variation between all five curves between 10% and 90% of the wheel travel is approximately 2.6%. As another example, the maximum variation between all five curves between 50% and 100% of compression is approximately 1.1%. As another example, the maximum variation between all five curves between 50% and 90% of compression is approximately 1.1%. In some embodiments, it can be desirable for the suspension assembly to be configured such that a vertical variation in the position of pivots 72b and/or 72c of at least 50, 60, 70, or 80 mm will result in no more than 10%, 8%, 6%, 5%, 4%, 3%, or 2% variation in anti-squat throughout the complete compression stroke, throughout the compression stroke from 10% to 90% of the stroke, throughout the compression stroke from 50% to 100% of the stroke, or throughout the compression stroke between 50% to 90% of the stroke.

As described above, there is relatively little variation in the leverage ratio and anti-squat curves of FIGS. 5A and 5B, respectively. The anti-rise curves of FIG. 5C, on the other hand, show a more significant level of variation. For example, with reference to the anti-rise curves shown in FIG. 5C, the maximum variation between all five curves is approximately 13.7%, which is at 0% compression or wheel travel. The variation between all five curves remains relatively large in other portions of the wheel travel, too. For example, the variation between all five curves is approximately 11.0% at 10% of wheel travel, 6.5% at 30% of wheel travel, 3.7% at 50% of wheel travel, 2.6% at 70% of wheel travel, 8.0% at 90% of wheel travel, and 11.5% at 100% of wheel travel.

In some embodiments, it can be desirable for the suspension assembly to be configured such that a change in configuration or position of pivots 72b and/or 72c of the link 74 that causes at least 10% variation in anti-rise at some point in the compression stroke causes no more than 5% variation in anti-squat at any point in the compression stroke, and causes no more than 0.06 variation in leverage ratio at any point in the compression stroke. In some embodiments, it can be desirable for the suspension assembly to be configured such that a change in configuration of a suspension member other than the chain stay that causes at least 10% variation in anti-rise at some point in the compression stroke causes no more than 5% variation in anti-squat at any point in the compression stroke, and causes no more than 0.1 variation in leverage ratio at any point in the compression stroke. In some embodiments, it can be desirable for the suspension assembly to be configured such that a change in configuration of a suspension member other than the chain stay that causes at least 10% variation in anti-rise at some point in the compression stroke causes no more than 1%, 2%, 3%, 4%, or 5% variation in anti-squat throughout the compression stroke between 30% and 90% of the compression stroke, and causes no more than 0.03, 0.04, 0.05, or 0.06 variation in leverage ratio throughout the compression stroke between 30% and 90% of the compression stroke.

Using the techniques disclosed herein, a designer of a bicycle can design one portion of the suspension system (such as the chain stay member 70, shock support assembly 480, and shock absorber 26) to optimize certain performance characteristics, such as leverage ratio and anti-squat, and independently design another portion of the suspension system (such as the seat stay member 76 and link 74) to optimize other performance characteristics, such as anti-rise. Stated another way, the chain stay member 70 and shock driving kinematics could be designed first, to optimize pedaling performance, and then the link 74 and seat stay member 76 could be designed next to adjust anti-rise to a target curve without dramatically changing the pedaling performance.

These techniques could also be used to create a bicycle that has a field adjustable suspension. For example, a bicycle assembly similar to as shown in FIG. 4 could be provided, and multiple attachment points on the seat tube 60 could be provided to enable attaching link 74 at different attachment points, thus moving the position of pivot axis 72b with respect to the main frame 414. This could allow a rider of the bicycle to tune certain performance characteristics, such as anti-rise, to a particular terrain or course, without significantly or dramatically affecting certain other performance characteristics, such as leverage ratio and anti-squat.

In addition to the adjustments to the link 74 discussed above with reference to FIGS. 4 and 5A-5C, various other adjustments to the suspension assembly can be made; some resulting in relatively major, large, significant, and/or dramatic effects on particular characteristics, and some resulting in relatively minor, small, less significant, and/or less dramatic effects on particular characteristics. Table 1 below provides a general summary of certain performance characteristics effects that may occur when adjusting various portions of a suspension assembly as disclosed herein, such as the example embodiment of FIG. 4.

**Table 1 - Summary of Kinematics Change Effects**

| **Pivot / Member** | **Adjustment Direction** | **Major Effect** | **Minor Effect** |
|---|---|---|---|
| Main Pivot (72a) | Front/Back (horizontally) | | Wheel Travel +/- |
| Main Pivot (72a) | Up/Down (vertically) | Anti-Squat Changes | Wheel Travel +/- |
| Hub Pivot (72d) | Front/Back (horizontally) | | Anti-Rise Changes |
| Hub Pivot (72d) | Up/Down (vertically) | | Anti-Squat Changes |
| Upper Link (74) | Front/Back (horizontally) | | Almost none |
| Upper Link (74) | Up/Down (vertically) | Anti-Rise Curve Angle Changes | |
| Upper Link (74) | Rotate | Anti-Rise Height Level Changes | |
| Second Shock Link Pivot (75e) | Front/Back (horizontally) | | LR shape adjust |
| Second Shock Link Pivot (75e) | Up/Down (vertically) | Changes to Leverage Ratio level / Rear Wheel Travel; | Changes to "bending" gradient of leverage ratio curve |
| | | Changes to Bike's Ground Clearance; and | |
| | | Changes to Resultant Bearing Load on other pivots: Main Pivot (72a), First Shock Link Main Frame Pivot (75c), and First Shock Link/Second Shock Link pivot (75d) | |
| The three pivots of first shock link (75d, 75c, & 75b) | [75d to 75c] / [75c to 75b] | The length-ratio created out of the positioning of these 3 points determines the Level of Leverage Ratio (e.g., the amount of Rear Wheel Travel) that is created for any given amount of Shock Travel | |
| | | The angles in the triangle defined by these 3 points determine the leverage ratio curve as "barrel shape," "hammock shape", "belly curve shape," progressive, or regressive overall. | |
| First Shock Link/Second Shock Link pivot (75d) | Up/Down (vertically) | Contributes to Bike's Ground Clearance | |
| Front Shock Pivot (75a) | Any direction | | To be seen in context with the first shock link pivots 75b and 75d. |
| | | | For example, if 75a is moved in a manner that rotates the front end of the shock absorber down, the leverage ratio curve will become more progressive. If 75a is moved in a manner that rotates the front end of the shock |
| | | | absorber up, the leverage ratio curve will become less progressive. |

Returning to FIG. 5A, the leverage ratio curves shown in this graph also illustrate another benefit of the suspension designs disclosed herein. Specifically, each of the five leverage ratio curves shown in the graph of FIG. 5A illustrates a desirable shape that may be referred to as a "belly curve." Stated another way, each of the five leverage ratio curves shown in FIG. 5A comprises a negative slope that gets progressively more negative as the suspension assembly is further compressed. In other words, the curve comprises a negative slope which has a greater negative magnitude the more the suspension assembly is compressed. Exhibiting such a belly curve is not a requirement of the techniques disclosed herein, but such a leverage ratio curve can be desirable, for example, because it can be desirable for the suspension to be less stiff when it begins compression, and to become progressively stiffer as the suspension assembly compresses. This can help with control of the bicycle and also help to prevent a harsh bottoming out of the suspension.

In some embodiments, this characteristic of the leverage ratio curve having a negative slope that gets progressively more negative as the suspension assembly is further compressed is exhibited throughout the entire range of suspension assembly compression (e.g., from 0% to 100% of wheel travel). In some embodiments, this characteristic of having a negative slope that gets progressively more negative as the suspension assembly is further compressed is exhibited throughout at least a majority of the range of suspension assembly compression, or throughout at least 75%, 80%, 90%, or 95% of the range of suspension assembly compression. The term "belly curve," for the purposes of this application, is defined as the portion of a leverage ratio curve that has a negative slope that gets progressively more negative as the suspension assembly is further compressed, unless the context clearly indicates otherwise.

Embodiments of bicycle assemblies disclosed herein can be capable of meeting a variety of target kinematics and/or performance characteristics, such as for leverage ratio, anti-squat, anti-rise, and/or rear wheel axle path, with at least some of those characteristics being independently tunable or adjustable. A summary of some such target values or ranges is provided below. It should be noted, however, that the example suspension configurations disclosed herein are not intended to be limited by these targets or desirable features, and at least some of the designs disclosed herein may not fulfil each of these targets or desirable features.

With respect to leverage ratio, as discussed above, one desirable feature is for at least a portion of the leverage ratio curve to exhibit a belly curve configuration. Further, with such a leverage ratio curve, which can be described as being progressive, the starting leverage ratio (e.g., at 0% suspension compression) can desirably be greater than the ending leverage ratio (e.g., at 100% suspension compression). For example, in some embodiments, the starting leverage ratio can be within a range of 2.9 to 3.0, 2.85 to 3.05, or 2.8 to 3.1, and the ending leverage ratio can be within a range of 2.5 to 2.6, 2.45 to 2.65, or 2.4 to 2.7. The amount of progressivity in the leverage ratio curve can be defined as the percentage reduction in leverage ratio from the starting leverage ratio to the ending leverage ratio. In some embodiments, the progressivity can desirably be within a range of 13.8% to 17%, 13% to 18%, or 10% to 20%.

With respect to anti-squat, in some embodiments, it can be desirable for the shape of an anti-squat curve to have a non-positive slope or, stated differently, to have a flat to negative slope. In some embodiments, however, it may be acceptable to have at least some positive slope, particularly in the later stages of suspension compression, such as at greater than 40%, 50%, or 60% of suspension compression. In some embodiments, different target levels of anti-squat may be desirable in portions of the suspension travel that are before or after the sag position. For example, it may be desirable for the sag position of a bicycle rear's suspension to be at 30% or approximately 30% of the suspension travel. In the area of the anti-squat curve before the sag position (e.g., wheel travel from 0% to 30% of the full compression stroke), it can be desirable for the anti-squat to be at least 100%. In some embodiments, it can be desirable for the anti-squat to be at least 90% or 95% in that area. Further, at the sag position (e.g., at 30% of the wheel travel), it can be desirable for the anti-squat to be within a range of 100% to 110%, 100% to 115%, 95% to 110%, 90% to 110%, and/or the like. Additionally, in the area from zero compression to the sag position (e.g., from 0% to 30% of the full compression stroke), it may sometimes be desirable for the anti-squat curve to exhibit a negative slope, such as by limiting the maximum anti-squat at 0% suspension compression to be no greater than 130%, but to be no greater than 110% at the sag position. Beyond the sag position (e.g., within the suspension compression range of 30% to 100%), it may be desirable to keep the anti-squat no greater than 105%, 110%, 112%, or 115%. Further, it may be desirable to have the anti-squat curve include a negative or non-positive slope in this range, allowing the minimum anti-squat to go from 100%, 95%, or 90% at the sag position to 80%, 75%, 70%, 60%, 50%, or 40% at the fully compressed position. As mentioned above, however, it may also be acceptable to have at least some positive slope in the compression range beyond the SAG position, such as positive slope that increases the anti-squat from approximately 110% at the SAG position to approximately 112% or 115% at the fully compressed position.

With respect to anti-rise, it can be desirable for the anti-rise curve to exhibit a positive slope. In some embodiments, it can be desirable to have an anti-rise curve with a flat or positive slope, and less desirable to have an anti-rise curve with a negative slope. Further, in some embodiments, it can be desirable for the anti-rise curve to have a minimum value of 40% and a maximum value of 50%, but it can also be desirable to have no more than 5% variation throughout the curve.

One reason it can be desirable to have a maximum anti-rise of 55% (or more desirably to have a maximum anti-rise of 50%) is that this can help to reduce or eliminate judder or wheel hop. In a bicycle assembly that has too high of a value for anti-rise, the mass of the rear wheel will be much less than the spring mass, and when suspension compression is induced by anti-rise, it will tend to lift to the rear wheel instead of squatting the rider and bike. This will tend to reduce traction and can cause wheel hop. Stated another way, it will tend to lower the vertical load on the tire at the start of brake force application, which can have the undesirable effect of introducing wheel hop or judder. In some embodiments, it can be desirable for the anti-rise curve to have or exhibit these characteristics not necessarily throughout the entire range of rear wheel travel, but at least in the regions of wheel travel where the bicycle will tend to spend the most time braking, such as 5% to 54% of rear wheel travel. Accordingly, in some embodiments, it can be desirable for the suspension assembly to exhibit an anti-rise curve having a shape that is flat or positively sloped and that is within a range of 40% to 50%, at least within the 5% to 54% of rear wheel travel portion of the curve.

In some embodiments, it is desirable for the bicycle assembly to have an anti-rise percentage between 25% and 45% at zero compression and between 35% and 55% at full compression. In some embodiments, it is desirable for the bicycle assembly to have an anti-rise percentage between 28% and 40% at zero compression and between 38.5% and 50.5% at full compression. In some embodiments, it is desirable for the bicycle assembly to have an anti-rise percentage between 30% and 38% at zero compression and between 40.5% and 48.5% at full compression. In some embodiments, it is desirable for the bicycle assembly to have an anti-rise percentage between 32% and 36% at zero compression and between 42.5% and 46.5% at full compression. In some embodiments, it is desirable for the bicycle assembly to have an anti-rise in any of the foregoing ranges, where the anti-rise is either constant or increasing as the amount of compression increases.

In some embodiments, it can be desirable for the anti-rise curve to exhibit a positive slope in the entire range of wheel travel. Through testing, however, it has been found that optimizing the anti-rise curve over a particular smaller range of the wheel travel can capture most of the benefit as compared to a curve that exhibits an optimum anti-rise curve over the entire range of wheel travel. For example, in some embodiments, it can be desirable for the anti-rise curve to exhibit a positive slope at least within the range of 5.4% to 53.59% (or 9.3 mm to 91.10 mm) of full wheel travel. In some embodiments, it can be desirable for the anti-rise curve to exhibit a positive slope at least within the range of 5% to 50%, 5% to 55%, 0% to 50%, 10% to 40%, 10% to 60%, 5% to 60%, 5% to 75%, or 5% to 80% of full wheel travel.

With respect to axle path, it can be desirable for the axle path to cause the hub axis to initially move rearward somewhat when a bump is hit (e.g., when the suspension starts to compress). For example, it may be desirable for the hub axis to move rearward during at least the first 15%, 20%, 25%, or 30% of suspension compression. Further, it may be desirable for the amount of rearward movement of the hub axis to be at least 1.5 mm, 2.0 mm, 2.5 mm, or 3 mm at the rearmost point throughout the suspension compression (measured in the horizontal direction, with reference to the starting position). In some embodiments, there can be at least some interplay between the amount of rearward movement of the hub axis and the amount of anti-squat and/or the shape of the anti-squat curve. In some embodiments, it can be desirable to set the amount of rearward travel of the hub axis to be as large as possible while still meeting desirable anti-squat targets. In some embodiments, at full compression stroke the hub axis is positioned approximately 13 mm forward of the zero compression position. In some embodiments, the hub axis is configured to be positioned approximately, at least, or no greater than 10, 11, 12, 13, 14, or 15 mm forward of the zero compression position when the suspension is at full compression.

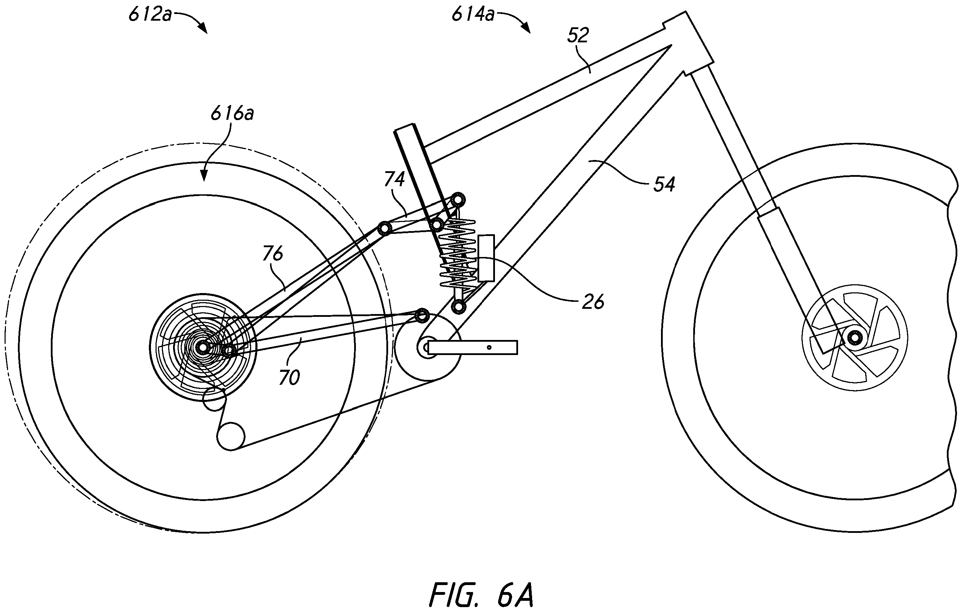

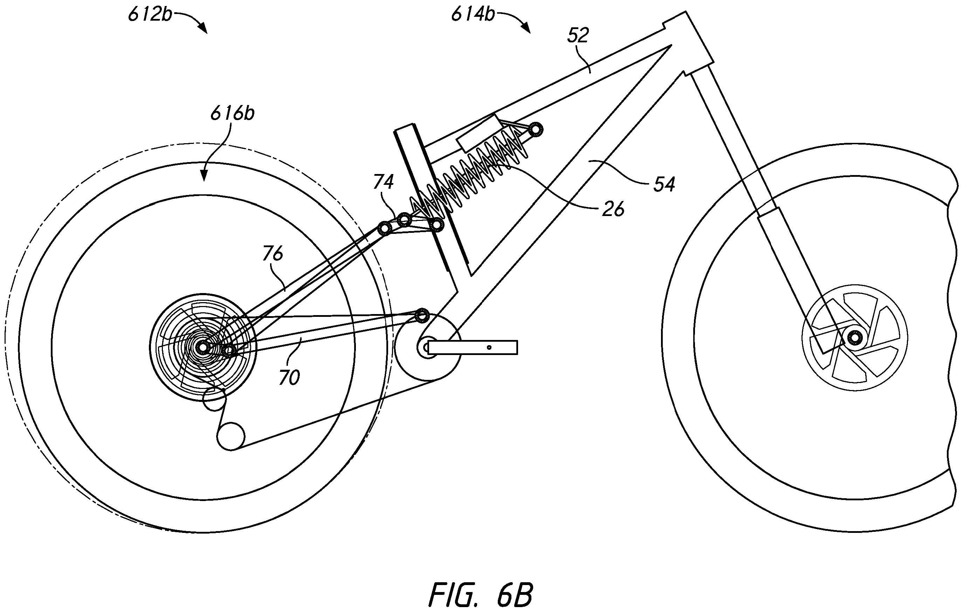

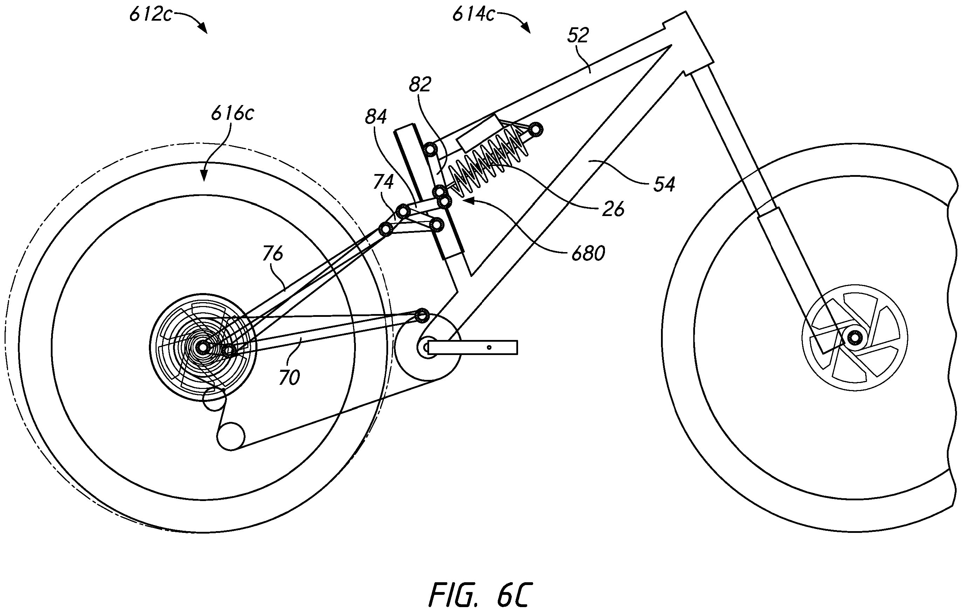

Turning to FIGS. 6A, 6B, and 6C, these figures illustrate schematic diagrams of three alternative embodiments of bicycle frame assemblies 612a, 612b, and 612c, respectively. These bicycle assemblies share many similarities to other bicycle assemblies disclosed herein, such as the bicycle frame assembly 12 of FIG. 2A, and the same or similar reference numbers are used to refer to the same or similar components. Specifically, FIG. 6A illustrates an embodiment that does not include a shock support assembly (such as shock support assembly 80 of FIG. 2A), and that also moves the shock absorber 26 to be coupled to the link or lever arm 74 and to a lower portion of the down tube 54. FIG. 6B illustrates an embodiment that also does not include a shock support assembly, and that attaches the shock absorber 26 to the link or lever arm 74, like FIG. 6A, but that also moves the other end of the shock absorber 26 to be coupled to the top tube 52 instead of the down tube 54. FIG. 6C illustrates an embodiment that is similar to the embodiment of FIG. 6B, but that also adds a shock support assembly 680. The shock support assembly 680 includes first and second links 82, 84, like the shock support assembly 80 of FIG. 2A. The shock support assembly 680 is configured differently, however, such as by attaching to the link or lever arm 74 and the top tube 52, instead of attaching to the chain stay and down tube or bottom bracket support member.

These figures are used to illustrate alternative embodiments that include similar chain stay 70 and seat stay 76 configurations (e.g., that have similar wheel motion kinematics) as in the embodiments of FIGS. 2A and 4, but that utilize different ways of driving the shock absorber 26. Due to the similar chain stay and seat stay configurations, the embodiments shown in FIGS. 6A-6C may be able to meet some of the kinematic targets discussed above, such as, for example, desirable ranges and/or shapes for anti-rise and anti-squat curves. Some other designs disclosed herein, however, such as embodiments that separate the kinematics of the wheel motion from the kinematics of driving the shock absorber, can be more desirable than the embodiments of FIGS. 6A-6C, because such embodiments can desirably achieve both the anti-rise and anti-squat curve target kinematics and also achieve a desirable leverage ratio curve. With the embodiments illustrated in FIGS. 6A-6C, on the other hand, it may be difficult or impossible to create the same anti-rise and anti-squat characteristics as for a design like shown in FIGS. 2A and 4 while also creating the same leverage ratio characteristics.

It could also be possible to make other variations on the designs disclosed herein. For example, a suspension design that utilizes a similar shock absorber positioning and shock support assembly configuration as shown in FIGS. 2A and 4 could be used with a single pivot rear suspension or other type of rear suspension instead of a four bar rear suspension. Such a design could potentially be able to achieve some of the leverage ratio characteristic benefits of other designs disclosed herein, but would likely not be able to achieve other beneficial characteristics, such as the desirable anti-rise and anti-squat characteristics of other designs disclosed herein.

### Additional Embodiments and Benefits

In one typical prior art arrangement, a shock absorber is situated in a substantially vertical orientation in front of a seat tube. However, in the presently illustrated arrangement, the rearward end 26b of the shock absorber is positioned relatively lower than the forward end 26a of the shock absorber, with the forward end 26a being coupled to the down tube 54. Furthermore, the rearward end 26b of the shock absorber 26 is supported by the shock support assembly 80 at a position below the link member 74. Thus, the shock absorber 26 is mounted at a significantly lower position within the bicycle frame 12 than in such a prior art arrangement. Additionally, the components of the shock support assembly 80 (e.g., the upper and lower shock links 82, 84) are preferably positioned substantially below the shock absorber 26, and the lower shock link 84-and at least a portion of the upper shock link 82-are preferably positioned below the down tube 54 and the bottom bracket support member 56. Accordingly, the illustrated arrangement provides a significantly lower center of gravity of the bicycle frame 12 than prior art arrangements, which improves handling characteristics of the associated bicycle 10. Preferably, in the relaxed configuration (shown in FIG. 2A), pivot axes 75b, 75c, 75d, and 75e are each positioned at least 5 inches below pivot axis 72b. In some embodiments, in the relaxed configuration, pivot axes 75d and 75e are each positioned at least 5, 6, 7, 8, 9, or 10 inches below pivot axis 72b. Preferably, pivot axis 75a is positioned at least 0.5 inches below pivot axis 72b. In some embodiments, pivot axis 75a is positioned 0-1, 0-2, or 0-3 inches below pivot axis 72b.

The relatively low center of gravity benefits of certain embodiments disclosed herein can also be defined or described in various other ways. For example, with reference to FIG. 2C (where the bicycle frame assembly 12 is shown in a relaxed configuration and oriented as it would be oriented when the bicycle is positioned in a riding position on a flat horizontal surface), in some embodiments, a main shock body of the shock absorber 26 (or in some cases, a majority of the main shock body) is positioned lower than the location where the link 74 is pivotably connected to the main frame 14 and/or to the seat tube 60 (e.g., lower than pivot axis 72b). In some embodiments, a first eye or eyelet of the shock absorber (e.g., at pivot axis 75a) and a second eye or eyelet of the shock absorber (e.g., at pivot axis 75b) are both positioned lower than the location where the link 74 is pivotably connected to the main frame 14 and/or to the seat tube 60 (e.g., lower than pivot axis 72b). In some embodiments, the main shock body, the first eye or eyelet of the shock absorber, and/or the second eye or eyelet of the shock absorber is positioned not higher than 220mm above a crank axis defined by a bottom bracket of the main frame. In other words, any one, two, or all three of dimensions H₁, H₂, and H₃ of FIG. 2C may be less than or equal to 220mm.

As another example, in some embodiments, all suspension members may be positioned below 1/2 a stack height of the bicycle assembly. See FIG. 2C, which illustrates stack height as dimension H_{S}, and a 1/2 stack height line as dimension Hs/2. It can be seen in this figure that all suspension members (e.g., link 74, seat stay member 76, chain stay member 70, shock support assembly 80, and shock absorber 26) are below 1/2 the stack height in the relaxed configuration. Further, in some embodiments, all suspension members may remain below 1/2 the stack height, even in the fully compressed configuration.

Various configurations disclosed herein that can exhibit a relatively low center of gravity can be more desirable than other ways of creating multi-bar rear suspension systems. For example, many of the designs disclosed herein that separate the kinematics of the wheel motion from the driving of the shock absorber include a four-bar link arrangement for the wheel motion, and an additional two links that connect one of the members of the four-bar link suspension (such as the chain stay) to the shock absorber. Although there are some other ways to use a four-bar link suspension arrangement for the wheel motion and an additional two links to drive the shock absorber (see, for example, the embodiment of FIG. 6C), many designs disclosed herein have benefits over such designs, such as enabling a lower center of gravity and/or more effectively separating the kinematics of the wheel motion from the driving of the shock absorber, as discussed above.

Another way to create a rear bicycle suspension is to utilize a six-bar suspension arrangement. One way to differentiate a four-bar suspension from a six-bar suspension is to count the number of pivots between the rear wheel and the front triangle of the main frame. If there are only two pivots in each of the upper mechanism (the mechanism that includes the forward end of the seat stay) and the lower mechanism (the mechanism that includes the forward end of the chain stay), then that is a four-bar suspension. See, for example, FIG. 2C, which includes two pivots in the upper mechanism (pivots 72c and 72b) and two pivots in the lower mechanism (pivots 72d and 72a). On the other hand, if there are more than two pivots in either the upper mechanism (the mechanism that includes the forward end of the seat stay) or the lower mechanism (the mechanism that includes the forward end of the chain stay), the suspension is likely a six-bar suspension instead of a four-bar suspension. In addition to the low center of gravity benefits of the designs disclosed herein, the four-bar designs disclosed herein can also be desirable over a six-bar suspension arrangement, because the four-bar designs disclosed herein can more effectively separate the kinematics of the wheel motion from the driving of the shock absorber.

As described above, the rearward end 26b of the shock absorber 26 is positioned relatively lower than the forward end 26a. Thus, the pivot axis 75b is positioned relatively lower than the pivot axis 75a, and a longitudinal axis of the shock absorber 26 is canted in a downward direction when moving from the forward end 26a toward the rearward end 26b of the shock absorber 26. In addition, preferably, the pivot axis 75a and the pivot axis 75b are both positioned forward of the crank axis Ac. Preferably, the forward pivot axis 75a of the shock absorber 26 is positioned between about 4 and 12 inches forward of the crank axis A_{C} and, more preferably, between about 6 and 9 inches forward of the crank axis A_{C}. Preferably, the rearward pivot axis 75b of the shock absorber 26 is positioned, in the relaxed configuration shown in FIG. 2, between about 1 and 3 inches forward of the crank axis Ac.

With such a construction, a relatively long shock absorber 26 may be accommodated in a relatively low position without resulting in a lengthening of the bicycle frame 12. In a long travel bicycle frame, it is desirable to provide a shock absorber of a relatively increased length in order to retain a desirable ratio between movement of the rear wheel and corresponding movement (i.e., compression or rebound movement) of the shock absorber (e.g., the leverage ratio). If the ratio of wheel movement to shock absorber movement is increased, the force transmitted to the shock absorber is increased, which may be offset by higher spring and damping rates of the shock absorber. The higher spring and damping rates result in a reduction in the ride characteristics of the shock absorber, however. Thus, the illustrated rear suspension assembly is capable of accommodating a suitably-sized shock absorber 26 in order to maintain a desirable ratio between movement of the rear wheel 24 and movement of the shock absorber 26.

In some embodiments, configuration of the shock support assembly 80 and shock absorber 26 may be further optimized by adding a shock extension to the rear end 26b of the shock absorber. The shock extension may comprise, for example, a first end connected to a portion of the rear end 26b of the shock absorber 26, and a second end comprising a pair of extension arms pivotally supported at pivot axis 75b. Using a shock extension can have various benefits, such as changing the shock leverage ratio, avoiding interference with the rear wheel or a seat tube (such as an alternative seat tube that is not split at its bottom like the seat tube 60 of FIG. 2D), and/or the like.

Desirably, one or more bearing assemblies are provided at each pivot 72, 75 to permit smooth pivoting motion of the rear suspension. Alternatively, bushings or other suitable constructions may also be used, as may be determined by one of skill in the art.

Preferably, the shock absorber 26 is mounted to the bicycle frame 12 such that a main body portion of the shock absorber 26 is positioned substantially within a perimeter defined in a generally vertical plane by lines drawn from pivot axes 72c to 72b, 72b to 75a, 75a to 75c, 75c to 75b, and 75b to 72c. With such an arrangement, the shock absorber 26 advantageously lowers the center of gravity of the bicycle 10 and is protected from damage by the link member 74, down tube 54, seat tube 60, and bottom bracket support member 56. In some embodiments, the shock absorber may comprise a reservoir portion, which may also be positioned within the above-described perimeter, or may be positioned at least partially outside of the above-described perimeter.

### Additional Embodiments

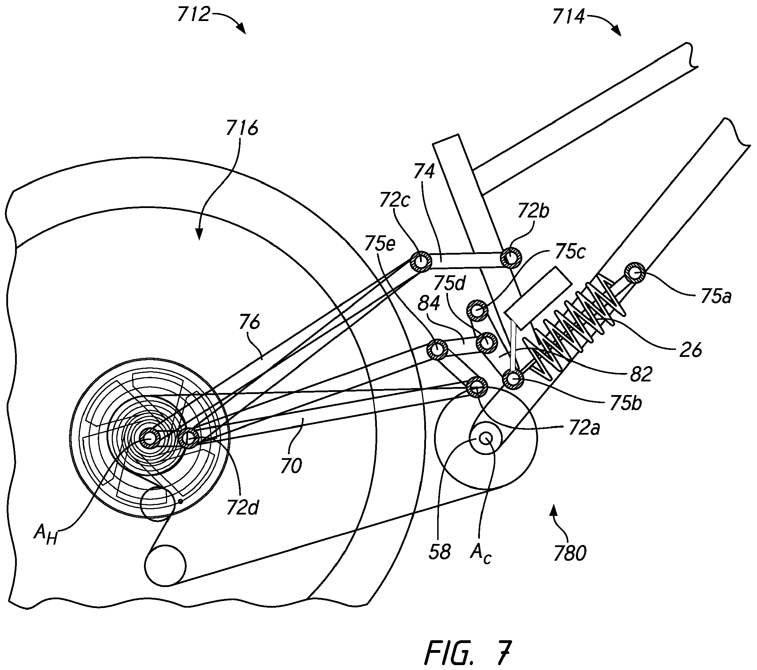

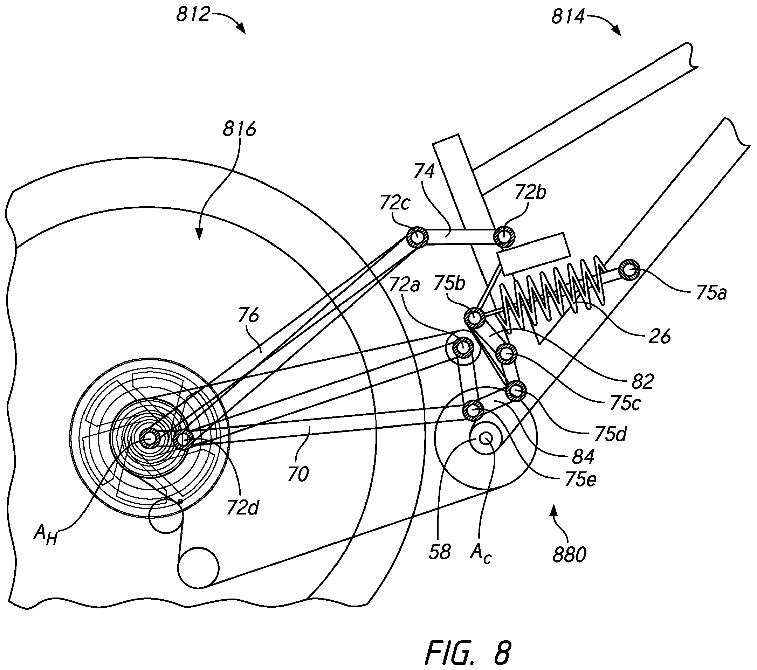

FIGS. 7 and 8 illustrate two alternative embodiments of bicycle frame assemblies 712 and 812, respectively, which share certain similarities to and can share at least some of the benefits of the bicycle frame assembly 12 of FIG. 2A described above. For example, both of these figures depict embodiments that separate the kinematics of driving the shock absorber 26 from the kinematics of the rear wheel movement, and thus can have pedaling performance characteristics optimized independently of leverage ratio, similar to as discussed above. One way this is accomplished is by using a shock support assembly 780 or 880 that includes first and second links 82, 84 to drive the shock absorber 26 with the chain stay member 70. These figures illustrate schematic side views that illustrate similar features as the assembly of FIG. 2A, and the same or similar reference numbers are used to refer to the same or similar components. For efficiency, the present descriptions of FIGS. 7 and 8 focus on significant differences from the embodiment of FIG. 2A, and any discussion in other portions of this specification related to the embodiment of FIG. 2A may also apply to the embodiments of FIGS. 7 and 8.

FIG. 7 illustrates a bicycle frame assembly 712 comprising a main frame 714 and a subframe 716. Similar components of the subframe 716 are included as in the subframe 16 of FIG. 2A. One difference, however, is that the second link 84 of the shock support assembly 780, and associated pivot axes 75d and 75e, have been moved to be above the crank axis Ac, the pivot axis 72a, and/or the bottom bracket 58. Further, the first link 82 of the shock support assembly 780 has been reconfigured such that pivot axis 75c is above pivot axes 75b and 75d instead of being between those axes. One result of this reconfiguration is that compression of the suspension system (e.g., upward movement of the hub axis A_{H} with respect to the main frame 714) will cause the second link 84 to push forward on the first link 82 to compress the shock absorber 26, instead of pulling backward on the first link 82.

FIG. 8 illustrates a bicycle frame assembly 812 comprising a main frame 814 and a subframe 816. Similar components of the subframe 816 are included as in the subframe 16 of FIG. 2A. One difference, however, is that the second link 84 of the shock support assembly 880, and associated pivot axes 75d and 75e have been moved to be above the crank axis A_{C} and/or the bottom bracket 58.

The configurations illustrated in FIGS. 7 and 8 can be desirable, for example, such as to increase ground clearance below the main frame 714, 814, provide increased protection to the shock support assembly 780, 880 from environmental factors, such as rocks thrown up by the front wheel, and/or the like, while still allowing for separation of the wheel motion kinematics from the shock driving kinematics. Some of the other embodiments disclosed herein, such as shown in FIG. 2A, can be more desirable, however, such as due to their desirable packaging and/or lower center of gravity benefits.

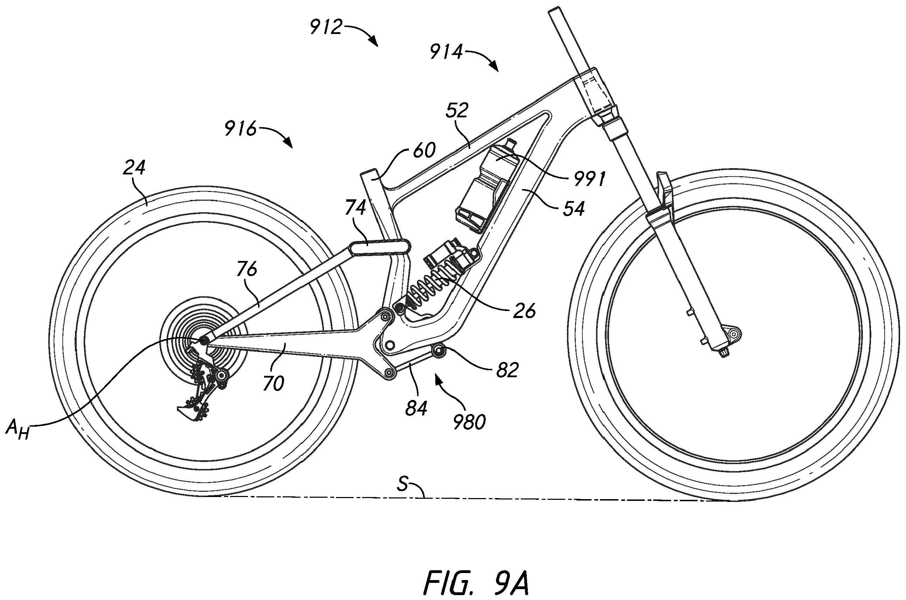

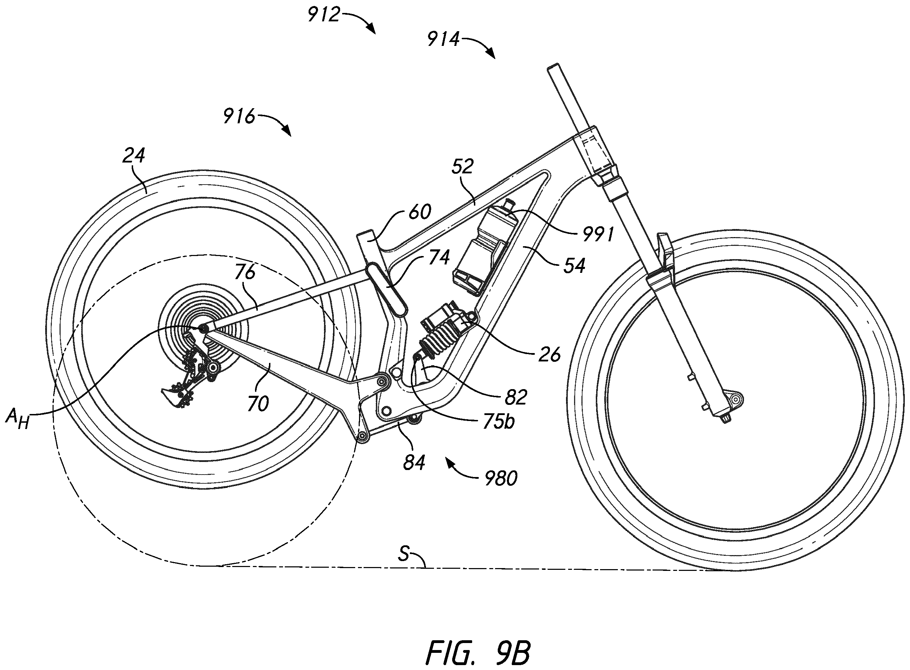

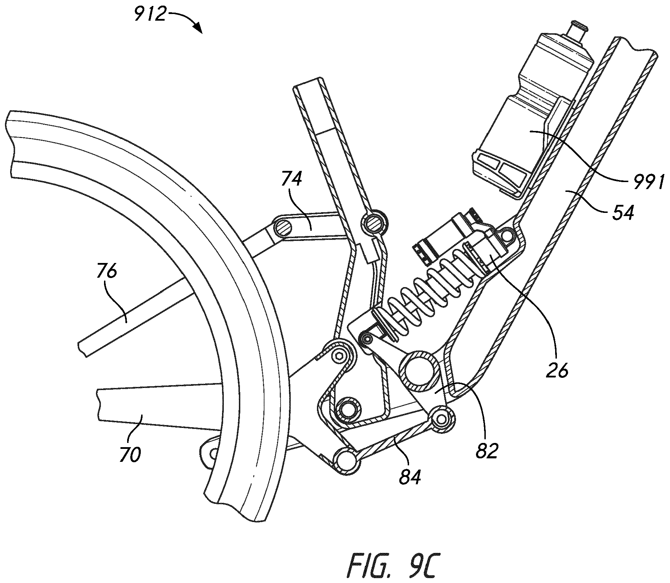

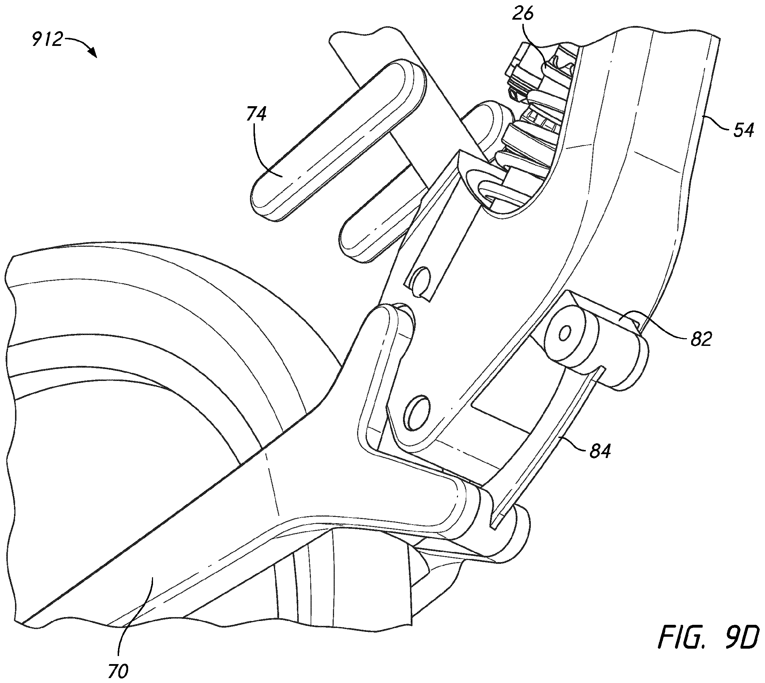

FIGS. 9A-9D illustrate another embodiment of a bicycle frame assembly 912 comprising a subframe 916 that is pivotable with respect to a mainframe 914. The bicycle frame assembly 912 is similar to the bicycle frame assembly 12 of FIG. 2A, and the same or similar reference numbers are used to refer to the same or similar components. The subframe 916 is a simplified version, however, that, among other things, positions the hub axis A_{H} coincident with the pivot axis between seat stay member 76 and chain stay member 70, and thus has a different wheel travel path than some of the other embodiments disclosed herein. FIG. 9A is a side view oriented similarly to FIG. 2A, with the suspension in a relaxed configuration. FIG. 9B is a side view with the suspension in a compressed configuration. FIG. 9C is a partial cross-sectional view, with the cross-section taken through a similar plane as for FIG. 2C. Finally, FIG. 9D is a partial front, bottom, and right side perspective view showing certain portions of the bicycle assembly 912.

Another difference in the bicycle frame assembly 912 of FIGS. 9A-9D as compared to FIG. 2A is that this embodiment illustrates where a water bottle 991 may be located above the shock absorber 26 on the down tube 54. Another difference is that this embodiment illustrates both the relaxed or uncompressed position of the subframe 916 (see FIGS. 9A, 9C, and 9D), and the fully compressed or bottomed out position (see FIG. 9B). With reference to FIG. 9B, it can be seen that, in the compressed position, the chain stay member 70 and the link 74 have rotated forward, while the lower or second shock link 84 and a lower portion of the upper or first shock link 82 have been pulled rearward. It should be noted that, although the upper end of first shock link 82 is shown moved forward in FIG. 9B, the shock absorber 26 is not shown compressed. In reality, the shock absorber 26 would be compressed in the configuration of FIG. 9B, with the eye or eyelet at the rearward end of the shock absorber 26 being coincident with pivot 75b defined by the upper end of the first shock link 82.

As discussed above, various embodiments disclosed herein can have a number of benefits, including benefits related to packaging or positioning of various components of the bicycle assembly. In some embodiments, it is desirable for the shock absorber to be positioned relatively low in the bicycle assembly, which can have a number of benefits, including lowering the center of gravity as discussed above. It can also be desirable to have the shock absorber position far enough rearward that there is room for a water bottle to be mounted on the down tube, similar to as shown in FIGS. 9A and 9B. Embodiments disclosed herein that mount the shock absorber in a relatively horizontal or downward canted orientation from forward to rear near the down tube, can also have certain benefits over embodiments that mount the shock absorber standing in a relatively vertical orientation in front of or near the seat tube (for example, as shown in FIG. 6A). Mounting the shock absorber standing in a relatively vertical orientation in front of or near the seat tube can have some benefits, but also has a variety of drawbacks. For example, it can be more difficult to adjust performance curves, such as leverage ratio in a design that has the shock absorber in such a position. As another example, seat post insertion may be worse in such an embodiment, and there may be structural challenges with such an embodiment that leave very little room for a solution. Further, such a shock absorber sits higher in the frame than in various embodiments disclosed herein, leading to a higher center of gravity.

### Additional Information

Various modifications to the implementations described in this disclosure may be readily apparent to those skilled in the art, and the generic principles defined herein may be applied to other implementations without departing from the spirit or scope of this disclosure. Thus, the claims are not intended to be limited to the implementations shown herein, but are to be accorded the widest scope consistent with this disclosure, the principles and the novel features disclosed herein. Additionally, as further discussed above, a person having ordinary skill in the art will readily appreciate, the terms "upper" and "lower" are sometimes used for ease of describing the figures, and indicate relative positions corresponding to the orientation of the figure on a properly oriented page, and may not reflect the proper orientation of the device as implemented.

Certain features that are described in this specification in the context of separate implementations also can be implemented in combination in a single implementation. Conversely, various features that are described in the context of a single implementation also can be implemented in multiple implementations separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination.

In describing the present technology, the following terminology may have been used: The singular forms "a," "an," and "the" include plural referents unless the context clearly dictates otherwise. Thus, for example, reference to an item includes reference to one or more items. The term "ones" refers to one, two, or more, and generally applies to the selection of some or all of a quantity. The term "plurality" refers to two or more of an item. The term "about" means quantities, dimensions, sizes, formulations, parameters, shapes and other characteristics need not be exact, but may be approximated and/or larger or smaller, as desired, reflecting acceptable tolerances, conversion factors, rounding off, measurement error and the like and other factors known to those of skill in the art. The term "substantially" means that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide. Numerical data may be expressed or presented herein in a range format. It is to be understood that such a range format is used merely for convenience and brevity and thus should be interpreted flexibly to include not only the numerical values explicitly recited as the limits of the range, but also interpreted to include all of the individual numerical values or sub-ranges encompassed within that range as if each numerical value and sub-range is explicitly recited. As an illustration, a numerical range of "about 1 to 5" should be interpreted to include not only the explicitly recited values of about 1 to about 5, but also include individual values and sub-ranges within the indicated range. Thus, included in this numerical range are individual values such as 2, 3, and 4 and sub-ranges such as 1-3, 2-4 and 3-5, etc. This same principle applies to ranges reciting only one numerical value (e.g., "greater than about 1") and should apply regardless of the breadth of the range or the characteristics being described. A plurality of items may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. Furthermore, where the terms "and" and "or" are used in conjunction with a list of items, they are to be interpreted broadly, in that any one or more of the listed items may be used alone or in combination with other listed items. The term "alternatively" refers to selection of one of two or more alternatives, and is not intended to limit the selection to only those listed alternatives or to only one of the listed alternatives at a time, unless the context clearly indicates otherwise.

## Claims

1. A bicycle assembly comprising:
a main frame comprising a seat tube, a head tube and at least one connecting tube connecting the seat tube and the head tube;
a subframe configured to rotate with respect to the main frame, the subframe comprising a seat stay, a chain stay, and a first link, the chain stay mounted to the main frame, the first link pivotably connected to the main frame at a first location and pivotably connected to the seat stay, and the seat stay pivotably connected to the chain stay;
a shock absorber having a first end and a second end, the first end of the shock absorber mounted on the main frame;
a second link having a first end and a second end, the first end of the second link connected to the second end of the shock absorber, and the second link being pivotable with respect to the main frame; and
a third link connected to the second link and the chain stay, wherein the second link and third link are configured to transmit force between the shock absorber and the chain stay.

2. The bicycle assembly of Claim 1, further comprising:
a bottom bracket support member, wherein the seat tube extends from the at least one connecting tube to the bottom bracket support member;
another connecting tube extending from the head tube to the seat tube; and
wherein the seat tube, the at least one connecting tube, and the another connecting tube form a generally triangular shape.

3. The bicycle assembly of any of Claims 1-2, wherein the seat stay comprises a pair of laterally spaced arms, and the chain stay comprises a pair of laterally spaced arms.

4. The bicycle assembly of any of Claims 1-3, wherein the second link is pivotably mounted to the main frame between the first end of the second link and the second end of the second link.

5. The bicycle assembly of any of Claims 1-4, wherein a forward end of the chain stay is pivotably connected to the main frame at a location that is above a pivotable connection between the forward end of the chain stay and the third link.

6. The bicycle assembly of Claim 5, wherein the forward end of the chain stay comprises an upper arm and a lower arm, the upper arm comprising the pivotable connection between the forward end of the chain stay and the main frame, the lower arm comprising the pivotable connection between the forward end of the chain stay and the third link.

7. The bicycle assembly of Claim 5, wherein the forward end of the chain stay is pivotably connected to the main frame above a crank axis, and the forward end of the chain stay is pivotably connected to the third link below the crank axis.

8. The bicycle assembly of any of Claims 1-7, further comprising a rear wheel hub axis, wherein the chain stay is pivotable with respect the seat stay about an axis that is below the rear wheel hub axis, and
wherein the rear wheel hub axis is defined by the seat stay.

9. The bicycle assembly of any of Claims 1-8, wherein, for at least 90% of a range of compression stroke between a first position where the bicycle assembly is 0% compressed and a second position where the bicycle assembly is 100% compressed, a leverage ratio of the bicycle assembly as a function of level of compression has a negative slope which has a greater negative magnitude the more the bicycle assembly is compressed.

10. The bicycle assembly of Claim 9, further comprising a rear brake assembly, wherein the bicycle assembly has anti-rise of less than or equal to 50%, and a graph of the anti-rise as a function of rear wheel travel has a non-negative slope, at least within a range of 5% to 50% of the rear wheel travel.

11. The bicycle assembly of Claim 10, wherein the bicycle assembly has anti-rise of greater than or equal to 40%.

12. The bicycle assembly of any of Claims 10-11, wherein the bicycle assembly is configured such that, when the bicycle assembly is in a riding position on a horizontal surface, with the subframe in a relaxed configuration, the bicycle assembly has at least one of the following: (1) a main shock body of the shock absorber positioned lower than the first location where the first link is pivotably connected to the main frame; (2) a first eye of the shock absorber and a second eye of the shock absorber, both being positioned lower than the first location where the first link is pivotably connected to the main frame; (3) the main shock body positioned not higher than 220mm above a crank axis defined by a bottom bracket of the main frame; (4) both the front shock eye and rear shock eye being not higher than 220mm above the crank axis defined by the bottom bracket; or (5) all suspension members remain below 1/2 a stack height of the bicycle assembly.

13. The bicycle assembly of Claim 9, further comprising a rear brake assembly, wherein the bicycle assembly has anti-rise between 25% and 45% at zero compression of the bicycle assembly, and between 35% and 55% at full compression of the bicycle assembly.

14. The bicycle assembly of any of Claims 1-13, further comprising a fork, a saddle and two wheels.

15. The bicycle assembly of any of Claims 1-14, wherein the chain stay is pivotably coupled to the third link at a pivot axis that moves along a path that is not dependent on force exerted on or generated by the shock absorber.
